# EUROPEAN PATENT SPECIFICATION

(11) **EP 2 436 069 B1**
(45) Date of publication and mention of the grant of the patent: **10.07.2019**
(21) Application number: 10781153.1
(22) Date of filing: 26.05.2010
(51) Int. Cl.: B82Y 40/00, B82Y 30/00, H01M 4/04, H01M 4/133, H01M 4/70, H01M 10/0525, H01M 4/134, H01M 4/38, H01M 4/02

(54) **INTERCONNECTED HOLLOW NANOSTRUCTURES CONTAINING HIGH CAPACITY ACTIVE MATERIALS FOR USE IN RECHARGEABLE BATTERIES**
VERNETZTE HOHLE NANOSTRUKTUREN MIT WIRKSTOFFEN VON HOHER KAPAZITÄT ZUR VERWENDUNG IN WIEDERAUFLADBAREN BATTERIEN
NANOSTRUCTURES CREUSES INTERCONNECTÉES CONTENANT DES MATIÈRES ACTIVES À GRANDE CAPACITÉ DESTINÉES À ÊTRE UTILISÉES DANS DES BATTERIES RECHARGEABLES

(30) Priority: 27.05.2009 US 181637 P; 02.06.2009 US 183529 P
(43) Date of publication of application: 04.04.2012
(73) Proprietor: Amprius, Inc., Sunnyvale, CA 94089 (US)
(72) Inventor: CUI, Yi, Stanford, California 94305 (US); HAN, Song, Foster City California 94404 (US); LOVENESS, Ghyrn, E., Menlo Park, California 94025 (US)
(74) Representative: Haseltine Lake Kempner LLP
(86) International application number: PCT/US2010/036237
(87) International publication number: WO 2010/138619

(56) References cited:
- EP-A2- 2 427 928
- WO-A1-2009/008558
- JP-A- 2007 123 100
- JP-A- 2008 269 827
- US-A1- 2006 216 603
- US-A1- 2008 044 732
- US-A1- 2008 274 403
- US-A1- 2009 042 102
- US-B1- 6 667 099
- CHENG MU ET AL: "Silicon nanotube array/gold electrode for direct electrochemistry of cytochrome c", JOURNAL OF PHYSICAL CHEMISTRY. B, MATERIALS, SURFACES, INTERFACES AND BIOPHYSICAL, WASHINGTON, DC, US, vol. 111, no. 6, 15 February 2007 (2007-02-15), pages 1491-1495, XP002665023, ISSN: 1089-5647, DOI: 10.1021/JP0657944 [retrieved on 2007-01-25]

## Description

### CROSS-REFERENCE TO RELATED APPLICATIONS

This application claims the benefit of U.S. Provisional Patent Application No. 61/181,637, filed May 27, 2009, entitled "Core-Shell High Capacity Nanowires for Battery Electrodes". This application also claims the benefit of U.S. Provisional Patent Application No. 61/183,529, filed June 02, 2009, entitled "Electrospinning to Fabricate Battery Electrodes".

### BACKGROUND

High capacity electrochemically active materials are desirable for battery applications. However, these materials exhibit substantial volume changes during battery cycling, e.g. swelling during lithiation and contraction during delithiation. For example, silicon swells as much as 400% during lithiation to its theoretical capacity of about 4200 mAh/g or Li_{4.4}Si. Volume changes of this magnitude cause pulverization of active materials structures, losses of electrical connections, and capacity fading.

Forming high capacity active materials into certain types of nanostructures can address some of these issues. Nanostructures have at least one nanoscale dimension, and swelling-contracting along this nano-dimension tends to be less destructive than along large dimensions. As such, nanostructures can remain substantially intact during battery cycling. However, integrating multiple nanostructures into a battery electrode layer that has adequate active material loadings is difficult. Such integration involves establishing and maintaining electrical interconnections and mechanical support over many cycles.

US2010/0196759 discloses a method for preparing an electrode layer of hollow nanostructured carbon material for a rechargeable battery electrode.

### SUMMARY

Provided are electrode layers for use in rechargeable batteries, such as lithium ion batteries, and related fabrication techniques. These electrode layers have interconnected hollow nanostructures that contain high capacity electrochemically active materials, such as silicon, tin, and germanium. In certain embodiments, a fabrication technique involves forming a nanoscale coating around multiple template structures and at least partially removing and/or shrinking these structures to form hollow cavities. These cavities provide space for the active materials of the nanostructures to swell into during battery cycling. This design helps to reduce the risk of pulverization and to maintain electrical contacts among the nanostructures. It also provides a very high surface area available ionic communication with the electrolyte. The nanostructures have nanoscale shells but may be substantially larger in other dimensions. Nanostructures can be interconnected during forming the nanoscale coating, when the coating formed around two nearby template structures overlap. In certain embodiments, the electrode layer also includes a conductive substrate, which may be also interconnected with the nanostructures.

In certain embodiments, a method for preparing an electrode layer of interconnected hollow nanostructures is provided. The nanostructures include a high capacity electrochemically active material. The method may involve receiving a template that includes template structures, forming a nanoscale template coating of the high capacity material around the template structures, and, at least partially, removing and/or shrinking the template to form an electrode layer. The template may be fabricating using an electrospinning technique, e.g., electrospinning a polymeric material to form template nanofibers having a length of at least about 5 micrometers. The template may include poly-acrylic nitrides (PAN), nylons, polyethylenes, polyethylene oxides, polyethylene terephthalates, polystyrenes, and/or polyvinyls. In certain embodiments, a template forms a layer having a thickness of between about 10 micrometer and 150 micrometers and a porosity of between about 20% and 80%.

In certain embodiments, a method involves pre-treating a template by compressing the template, thermally stabilizing the template, and/or carbonizing the template. For example, a template may be thermally stabilizes by heating the template in an argon atmosphere to between about 150°C and 250°C for at least about 2 hours. In certain embodiments, a method involves forming a nanoscale substrate coating of the high capacity materials over a conductive substrate surface adjacent to the template. The nanoscale template coating and the nanoscale substrate coating may partially overlap to interconnect the conductive substrate and the interconnected hollow nanostructures.

In certain embodiments, forming a nanoscale template coating around the template involves two deposition stages, e.g., an initial deposition stage and a bulk deposition stage. An initial deposition stage may be performed at initial process conditions such that no substantial shape distortions of the template occur during the initial deposition stage. A bulk deposition stage performed at bulk process conditions that are different from the initial process conditions. The bulk conditions may provide a higher deposition rate of the nanoscale template coating during the bulk deposition stage.

In certain embodiments, at least some removal or shrinking of a template occurs during formation the nanoscale template coating around the template structures. Partially removal or shrinking of a template may include one or more of the following operations: burning the template at a temperature of at least about 300°C in presence of an oxidant, chemical etching the template, and annealing the template.

In certain embodiments, a method may involve forming a second coating over the interconnected hollow nanostructures. The second coating may be configured to increase an electronic conductivity of the electrode layer, improve solid electrolyte interphase (SEI) characteristics of the electrode layer, and/or to limit structural changes of the interconnected hollow nanostructures.

In certain embodiments, an electrode layer for use in a rechargeable battery includes interconnected hollow nanostructures having an aspect ratio of at least about four, a length of at least about 5 micrometers, and a shell thickness of less than about 100 nanometers. These nanostructures may include one or more high capacity electrochemically active materials. The interconnected hollow nanostructures form internal cavities that provide free space for the high capacity active material to swell into during cycling of the rechargeable battery. The internal cavities may be substantially inaccessible to an electrolyte of the rechargeable battery. In certain embodiments, the electrode layer is configured to provide a stable energy capacity of at least about 2000 mAh/g after at least 100 cycles based on the weight of the active material. An electrode layer may also include junction structures interconnecting two or more hollow nanostructures. The junction structures may include one or more of the following materials: a high capacity electrochemically active material, metal, and a polymeric binder.

In certain embodiments, an electrode layer includes a conductive substrate. Additional junction structures may interconnect some of the interconnected hollow nanostructures and conductive substrate. In certain embodiments, the active material includes silicon, tin, and/or germanium. An electrode layer may also include an outer layer substantially covering an outer surface of the interconnected hollow nanostructures. The outer layer may include carbon, titanium, silicon, aluminum, and/or copper. In certain embodiments, an electrode layer has a porosity of between about 20 % and 80 %. In certain embodiments, a rechargeable battery is a lithium ion battery and the active material of the electrode layer is a negative active material.

In certain embodiments, a lithium ion battery includes an electrode layer that contains interconnected hollow nanostructures having an aspect ratio of at least about four, a length of at least about 5 micrometers, and a shell thickness of less than about 100 nanometers. The hollow nanostructures may include one or more high capacity electrochemically active materials. The hollow nanostructures form internal cavities that provide free space for the high capacity active material to swell into during cycling of the rechargeable battery.

Provided are also electrode assemblies that contain electrochemically active materials for use in batteries, such as lithium ion batteries. Provided also are methods for fabricating these assemblies. In certain embodiments, fabrication involves one or more electrospinning operations such as, for example, electrospinning to deposit a layer of fibers on a conductive substrate. These fibers may include one or more electrochemically active materials. In the same or other embodiments, these or similar fibers can serve as templates for depositing one or more electrochemically active materials. Some examples of active materials include silicon, tin, and/or germanium. Also provided are electrode fibers that include cores containing a first active material and shells or optionally second shells (surrounding inner shells) containing a second active material. The second active material is electrochemically opposite to the first active material (e.g., the core could contain negative electrode active material and the shell could contain positive electrode active material). One or more shells can function as a separator and/or as an electrolyte.

In certain embodiments, a method for fabricating an electrode assembly including an electrochemically active material is provided. The electrode assembly can be used in a battery, such as a lithium ion battery. The method includes providing a thin film substrate having a first surface and a second surface and depositing an initial layer including first electrospun fibers on the first surface using an electrospinning deposition technique. The electrospun fibers include one or more electrochemically active materials. The method may also include depositing, using an electrospinning deposition technique, a second layer that includes second electrospun fibers. In certain embodiments, the method proceeds with one or more of the following operations: annealing, calcining, carbonizing, sintering, compressing, and cooling.

In certain embodiments, a second layer is deposited on the second surface of the substrate. An initial layer and second layer may have substantially the same thicknesses and substantially the same compositions. In certain embodiments, an initial layer includes a negative active material. A second layer may include a positive active material. Furthermore, a thin film substrate may include a permeable membrane, such as a battery separator, a battery electrolyte, or a combination of a battery separator and electrolyte. In certain embodiments, an initial layer and/or second layer include discrete patches positioned on the substrate such that some portions of the first surface and/or the second surface of the substrate are exposed in between these patches. The discrete patches may be formed using two mechanical stops and/or an electrical shield.

In certain embodiments, a second layer is deposited over the initial layer. The method may also include depositing a third layer containing third electrospun fibers over the second layer, depositing a fourth layer containing fourth electrospun fibers over the third layer and separating the initial layer from the substrate to form a stack that includes four layers, i.e., the initial layer, the second layer, the third layer, and the fourth layer. The first layer includes electrospun fibers that may include one or more electrochemically active materials. The third electrospun fibers include a different active material. For example, a first layer may include a positive active material, while a third layer may include a negative active material or vice versa. The fourth layer and second layer may have substantially the same thickness and substantially the same composition and include a battery separator, a battery electrolyte, or a combination of a battery separator and electrolyte. The method may also include winding the stack that includes the four layers into a jellyroll and positioning the jellyroll into a battery case.

In certain embodiments, an electrode assembly includes an electrolyte material. In the same or other embodiments, electrospun fibers of an initial layer include two groups of fibers: a first group including one electrochemically active material and a second group including a different electrochemically active material. Examples of electrochemically active materials include silicon, germanium, and tin. In certain specific example, an electrochemically active material includes silicon nanowires. In certain embodiments, a substrate used for depositing a layer of electrospun fibers is a continuous foil of one or more of the following types: a copper foil, a stainless steel foil, an aluminum foil, a titanium foil, a Mylar film, a polymer paper, a carbon a fiber paper, and a carbon fiber mesh. In certain embodiments, depositing an initial layer comprises feeding a liquid precursor through an electrospinning nozzle. The liquid precursor includes a polymer base and active material particles.

In certain embodiments, a method for fabricating an electrode layer includes depositing an initial layer that includes electrospun fibers. The fibers have core-shell structures and include one or more electrochemically active materials. The method may involve processing the initial layer to change the shapes and/or compositions of the electrospun fibers in order to form an electrode layer. During processing, the solid cores are changed into hollow cylinders. Processing may include drying out a solvent from the electrospun fibers and/or performing one or more post-deposition treatments, such as annealing, calcining, carbonizing, sintering, compressing, and/or cooling.

In certain embodiments, a method for fabricating an electrode layer involves depositing an initial layer that includes electrospun fibers. The electrospun fiber may include a polymer material. The method may also involve forming a amorphous silicon coating silicon around the electrospun fibers and processing the initial layer to form the electrode layer. The electrospun fibers may include an electrochemically active material.

In certain embodiments, an electrode fiber for use in a battery electrode includes a core having a first electrochemically active material, a shell formed around the core, and a second shell formed around the shell and including a second electrochemically active material that is electrochemically opposite to the first active material. The inner shell may include a separator material and/or an electrolyte material and may provide an electronic insulation between the core and the second shell. The shell may also be configured to transport electrochemically active ions between the core and the second shell.

These and other aspects of the invention are described further below with reference to the figures.

### BRIEF DESCRIPTION OF THE DRAWINGS

FIG. 1 is a process flowchart of a technique for preparing an electrode layer that has interconnected hollow nanostructures containing a high capacity electrochemically active material in accordance with certain embodiments.
FIG. 2A illustrates a perspective schematic view of an assembly that includes a substrate and a plurality of template patches in accordance with certain embodiments.
FIG. 2B illustrates a side schematic view of an assembly that includes a substrate and a plurality of template structures in accordance with certain embodiments.
FIG. 3A is a schematic representation of a template having two template structures proximate to each other and to the substrate prior to forming a nanoscale coating containing a high capacity material in accordance with certain embodiments.
FIG. 3B is a schematic representation of an electrode layer containing interconnected hollow nanostructures formed around the two templates and on the substrate surface that has two joint structures in accordance with certain embodiments.
FIG. 4 is a schematic representation of a structure at three different illustrative stages of the electrode layer fabrication process in accordance with certain embodiments.
FIGS. 5A-B are top and side schematic views of an illustrative electrode arrangement in accordance with certain embodiments.
FIGS. 6A-B are top and perspective schematic views of an illustrative round wound cell in accordance with certain embodiments.
FIG. 7 is a top schematic view of an illustrative prismatic wound cell in accordance with certain embodiments.
FIGS. 8A-B are top and perspective schematic views of an illustrative stack of electrodes and separator sheets in accordance with certain embodiments.
FIG. 9 is a schematic cross-section view of an example of a wound cell in accordance with embodiments.
FIG. 10 illustrates an example of a general process for fabrication an electrochemical cell.
FIG. 11 illustrates an example of an electrospinning device for depositing one or more layer of an electrode in accordance with certain embodiments.
FIG. 12 illustrates an example of an electrospinning apparatus for depositing one or more layer of an electrode in accordance with certain embodiments.
FIG. 13 illustrates an example of a general process for depositing one or more layer of an electrode in accordance with certain embodiments.
FIG. 14A is an illustrative representation of an battery fiber ejected from the electrospinning nozzle.
FIG. 14B illustrates two examples of battery fibers in accordance with certain embodiments.
FIGS. 15A and 15B illustrate top and side views of a patch including a substrate and four battery layers in accordance with certain embodiments.

### DETAILED DESCRIPTION OF EXAMPLE EMBODIMENTS

In the following description, numerous specific details are set forth in order to provide a thorough understanding of the present invention. The present invention may be practiced without some or all of these specific details. In other instances, well known process operations have not been described in detail to not unnecessarily obscure the present invention. While the invention will be described in conjunction with the specific embodiments, it will be understood that it is not intended to limit the invention to the embodiments.

### Introduction

High capacity electrochemically active materials can be formed into nanostructures for use in rechargeable batteries. Nanostructures tend to deteriorate much more slowly than larger structures during battery cycling. This is because they pulverize less readily and, therefore, maintain electrical contact the electronically conductive current collects of an electrode. Yet, producing an electrode active layer containing nanostructures with adequate active material loading is challenging. For example, it is difficult to mechanically arrange, support, and electrically interconnect a multiplicity of nanostructures and then maintain these arrangements and interconnections over a large number of cycles. For example, solid nanoparticles that are only 0.05-0.10 micrometers in diameter must rely on many electrical connections and intermediate structures for electrical conductivity to the substrate in a typical 50 - 100 micrometer thick active layer. Initial electrical connections formed, for example, by direct contacts between the nanoparticles and conductive additives are often lost when the nanoparticles swell during lithiation / charging. This swelling pushes apart the nanoparticles and other components. When nanoparticles shrink during delithiation / discharging, many initial connections may be lost leading to "unconnected" active particle, which effectively become "inactive". Another type of nanostructures is a nanofilm. Nanofilms are typically less than 0.1 to 0.25 micrometers thick and, therefore, can include only very small amounts of the active material per unit area of electrode face and therefore have inadequate capacity for most battery applications.

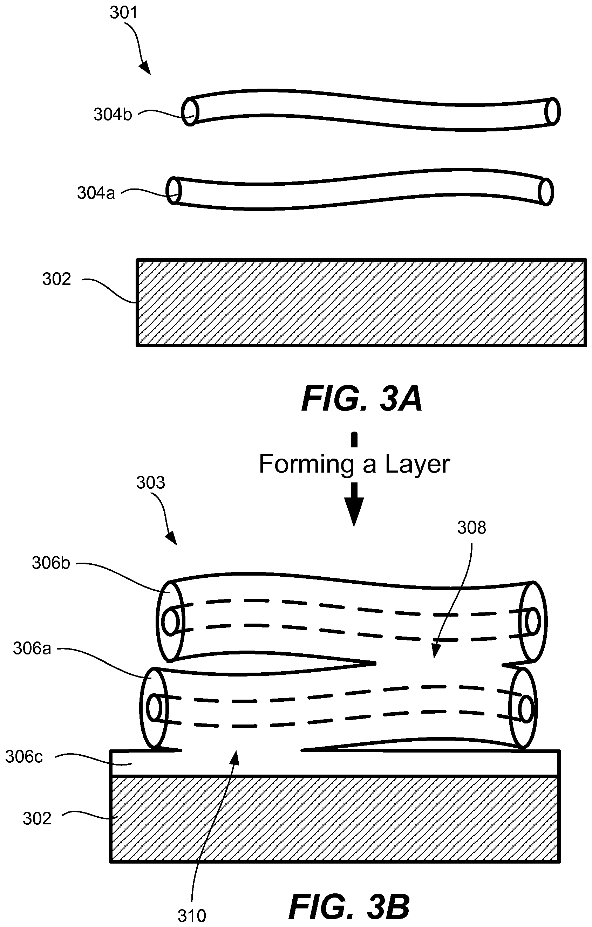

Interconnected hollow nanostructures as disclosed herein combine some favorable characteristics of the nanostructures described above and provide additional new characteristics and capabilities that were previously not attainable by solid structures. One example of hollow silicon nanostructures for use in battery electrodes are shown in FIG. 3B. These hollow nanostructures have nanoscale shells, while other dimensions could be substantially larger. For example, nanotubes can have an inner diameter of up to 5 micrometers and a length of up to 50 micrometers and sometimes even longer. These relative large nanotubes can still withstand lithiation / delithiation cycling without substantial pulverization because of their thin nanoscale shells. Such nanotubes have inside cavities available for accommodating expanding active materials. Without being restricted to any particular theory, it is believed that high capacity materials, such as amorphous silicon, exhibit different swelling / contraction behavior when arranged into hollow structures relative to other nanostructures. This difference proved to be unexpectedly beneficial to the stability of the novel nanostructures during battery cycling, which is evident from the exceptional cycle life performance of the batteries assembled with the novel electrode layers. For example, the experiment results demonstrated over 2000 mAh/g stable capacity after more than 140 cycles.

Interconnected hollow nanostructures can be prepared by forming a coating containing a high capacity material around template structures. In certain embodiments, when template structures are positioned relatively close to each other or to the substrate, the coating layers overlap forming joint structures. The template is then partially or completely removed and/or shrunk to form hollow cavities inside the nanostructures. These and other aspects of electrode layers and fabrication techniques will now be described in more detail.

### Process

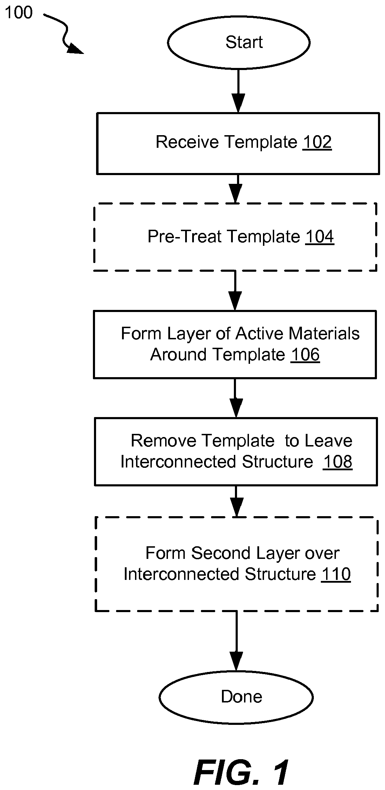

FIG. 1 is a process flowchart depicting a technique for preparing an electrode layer that has interconnected hollow nanostructures containing a high capacity electrochemically active material in accordance with certain embodiments. The process 100 may start with receiving a template containing multiple template structures in an operation 102. Examples of template structures include high-aspect ratio (e.g., at least about 4, 10, or 50) fibers and hollow tubes (e.g., carbon nanotubes), particles (e.g., substantially round particles), flakes, particles or spheres, and other types of template structures. Generally, a template can have any shape that provides an adequate surface for forming a high capacity material coating that can later be formed into hollow nanostructures. A principal cross-section dimension of the template structures (e.g., a diameter for fibers and particles) may be between about 1 nanometer and 5,000 nanometers or, more particularly, between about 10 nanometers and 1,000 nanometers or even more particularly between 100 nanometers and 500 nanometers. In particular embodiments, the template includes multiple randomly oriented fibers. The fibers may be straight (e.g., carbon nanotubes, carbon fibers) or curvy (e.g., electrospun polymer fibers). The fibers may be at least about 100 nanometers long on average or, more particularly, at least about 1 micrometer long or even at least about 50 micrometers.

Individual fibers or other template structures may be positioned relatively close to each other to ensure that when coating layers are deposited onto the structures, at least some of the layers overlap and form joint structures. In other words, at least some distances between template structures should be less than two thicknesses of the coating layer. Some template structures may be in a direct contact with each other. For example, a layer of randomly oriented fibers may be used as a template where each fiber will have at least two contact points with other fibers.

In certain embodiments, a template has a porosity of between about 20% and 80% or, more particularly, between about 50% and 70%. Higher porosity may be needed for depositing thicker layers and/or to form electrode layers that themselves will have high porosities (e.g., to improve electrolyte migration). The template porosity should be distinguished from the electrode layer porosity, which depends on other factors as well. In certain embodiments, template structures are attached to another common element, e.g., a substrate, such as a current collecting substrate. In these embodiments, the template structures may exist without contacting each other. For example, metal silicide nanowires can be formed on a metal substrate and used as a template. Examples of such templates are described in US Provisional Patent Application No. 61/310,183, entitled "Electrochemically Active Structures Containing Silicides," filed on March 3, 2010. It should be noted that such templates may still have some incidental contacts among template structures.

A template should withstand, at least initially, the process conditions used during formation of the high capacity coating. While some collapsing, shrinking, and/or other shape distortions may be allowed, the template should be capable of providing initial mechanical support for the formed coating. Any major shape distortions that would eventually prevent formation of hollow nanostructures should be avoided. This can be achieved by selecting robust template materials (e.g., heat resistant material) or controlling the coating conditions in specific ways, which is described below in more details.

Examples of template materials include various polymer materials (e.g., poly-acrylic nitrides (PAN) (as in oxidized PAN fibers), nylons, polyethylenes, polyethylene oxides, polyethylene terephthalates, polystyrenes, and polyvinyls), carbon-based materials (e.g., graphite, coke, carbon nanotubes, carbon fibers), metals (e.g., copper, nickel, aluminum), metal oxides, and metal silicides. Template materials that can be provided as electrospun fibers or any other forms are described in U.S. Provisional Patent Application No. 61/183,529, entitled "Electrospinning to Fabricate Battery Electrodes".

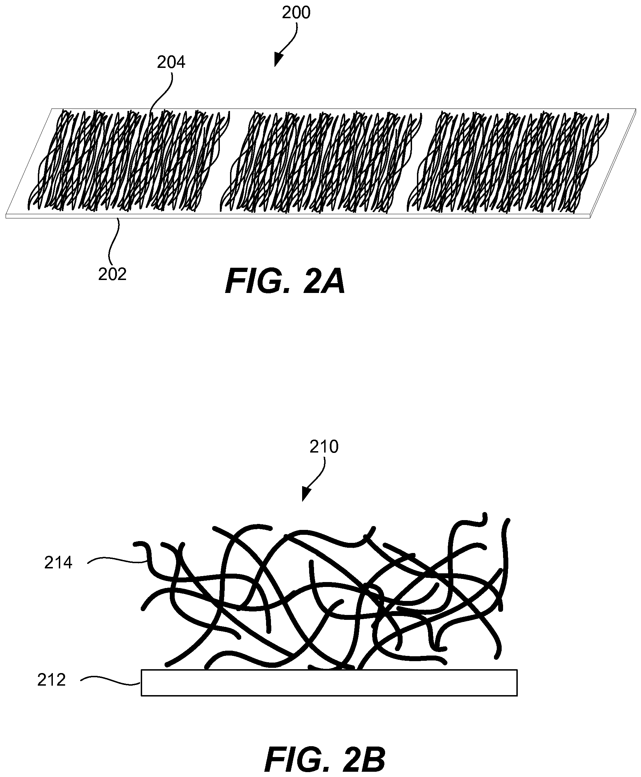

A template may form a layer that has a thickness of between about 1 micrometer and 300 micrometers or, more particularly, between about 10 micrometers and 150 micrometers, or even between about 50 micrometers and 100 micrometers. This layer may define future boundaries of the electrode layer. A template layer may be formed as a discrete patch that defines dimensions (e.g., length and/or width) of the future electrode. This example is further described below in the context of FIG. 2A.

In certain embodiments, a template layer is positioned adjacent to a substrate layer prior to coating. For example, a substrate layer may be a thin foil having a thickness of between about 5 micrometers and 50 micrometers or, more particularly, between about 10 micrometers and 30 micrometers. In other embodiments, a substrate layer is a mesh, perforated sheet, foam, and the like. In these embodiments, the template may be positioned within the substrate layer, e.g., template structures are dendrites extending from the mesh wires. Examples of substrate materials include copper, coated and un-coated metal oxides, stainless steel, titanium, aluminum, nickel, chromium, tungsten, metal nitrides, metal carbides, carbon, carbon fiber, graphite, graphene, carbon mesh, conductive polymers, or combinations of the above including multi-layer structures. In certain embodiments, a substrate may have functional and/or protective layers, e.g., a catalyst layer, diffusion barrier layer, and/or adhesion layer. Various examples of such layers are described in US Provisional Patent Application No. 61/260,297, entitled "Intermediate Layers for Electrode Fabrication," filed on November 11, 2009.

FIG. 2A illustrates a perspective schematic view of an assembly 200 that includes a substrate 202 and a plurality of template patches 204 in accordance with certain embodiments. This assembly 200 may be formed, for example, by electrospinning template fibers directly onto the substrate 202 or depositing previously electrospun fibers onto the substrate 202. In some cases, the template patches are provided on both sides of the substrate. Various examples of active layer arrangements are described below in the context of an electrode and a battery. In certain embodiments, a template patch 204 has a length corresponding to a length or width of the final battery electrode. The support substrate 202 may be cut, at a later stage in the fabrication, in order to separate the template patches into individual electrodes.

FIG. 2B is a side schematic view of an assembly 210 that includes a substrate 212 and a plurality of template structures 214 in accordance with certain embodiments. Some of the template structures 214 can be substrate rooted, which can provide a mechanical connection between the template and the substrate 212. If a portion of the template later remains in the electrode layer, this substrate rooting may help to provide at least some mechanical support and/or electronic conductivity to the electrode layer. Substrate rooting can take many forms as discussed in US Patent Application 12/437,529, entitled "Electrode Including Nanostructures for Rechargeable Cells", filed on May 7, 2009. In some embodiments, the template is not bonded to the substrate. Forming an active material coating may provide bonding to the substrate as explained below in the context of FIGS. 3A and 3B. Other bonding operations and/or materials may be used.. For example, an adhesion layer can be formed on a substrate to enhance adhesion of active material structures to the substrate. In other embodiments, the template structures 214 are temporarily supported on the substrate 212 with, for example, a binder, which is later removed prior or during formation of the high capacity material coating. In other examples, the template structures 214 are supported on the substrate 212 using electrostatic or magnetic forces.

Returning to FIG. 1, the received template may be pre-treated in an operation 104 prior to formation of the high capacity coating. Examples of pre-treatment operations include treatments that interconnect template structures, attach the template to a substrate, achieve certain desired shapes and/or porosity characteristics of the template, thermally stabilize the template, modify composition of the template (e.g., carbonize polymers) and electrical conductivity, and accomplish various other purposes. In certain embodiments, a template is compressed to reduce its porosity or achieve a target thickness, e.g., in order to provide a higher level of interconnection among resulting hollow nanostructures. A polymer-based template may be heated to at least about 100°C or, more particularly, to at least about 150°C during the compression.

In the same or other embodiments, a polymer-based template may be thermally stabilized in operation 104. For example, polymer based template structures can be heated to between about 100°C and 300°C or, more particularly, to between about 150°C and 250°C for a period of between about 1 hours and 48 hours or, more particularly, between about 12 hours and 28 hours, in an inert atmosphere (e.g., argon). In certain embodiments, an oxidizing agent may be added into the chamber to form an oxide layer (e.g., for form oxidized PAN) and even partially burn out template structures to change their dimensions and/or composition.

A polymer-based template may also be partially or completely pyrolized or carbonized. For example, carbonization may help to improve thermal stability and surface properties for subsequent processing. In certain embodiments, carbonization involves heating the template to between about 300°C and 2000°C or, more particularly, to between about 500°C and 1700°C, for a period between about 0.25 hours and 4 hours or, more particularly, to between about 0.5 hours and 2 hours. Carbonization or pyrolysis may be performed in various environments, which are typically inert or reducing.

The process 100 may continue with forming a nanoscale coating containing one or more high capacity active materials around the template in an operation 106. The coating may be, on average, between about 5 nanometers and 1000 nanometers thick or, more particularly, between about 10 nanometers and 500 nanometers thick or even between about 20 nanometers and 100 nanometers. This thickness may be determined, at least in part, by the composition of the coated materials and the cross-section dimension (e.g., diameter) of the shell formed by the coated materials and determined by the template dimensions, which are described above.

High capacity active materials are defined as any electrochemically active materials that have a theoretical lithiation capacity of at least about 600 mAh/g. Examples of such materials include silicon containing materials (e.g., crystalline silicon, amorphous silicon, other silicides, silicon oxides, sub-oxides, oxy-nitrides), tin-containing materials (e.g., tin, tin oxide), germanium, carbon-containing materials, metal hydrides (e.g., MgH₂), silicides, phosphides, and nitrides. Other examples include carbon-silicon combinations (e.g., carbon-coated silicon, silicon-coated carbon, carbon doped with silicon, silicon doped with carbon, and alloys including carbon and silicon), carbon germanium combinations (e.g., carbon-coated germanium, germanium-coated carbon, carbon doped with germanium, and germanium doped with carbon), and carbon-tin combinations (e.g., carbon-coated tin, tin-coated carbon, carbon doped with tin, and tin doped with carbon). In certain embodiments, a coating may include active materials that do not reach the theoretical lithiation capacity listed above. These materials can be used in combination with the high capacity active materials or by themselves.

This technique may be used to form both negative and positive electrode layers. Examples of positive electrochemically active materials include various lithium metal oxides (e.g., LiCoO₂, LiFePO₄, LiMnO_{2,} LiNiO₂, LiMn₂O₄, LiCoPO₄, LiNi_{1/3}Co_{1/3}Mn_{1/3}O₂, LiNi_{X}Co_{Y}Al_{Z}O2, LiFe₂(SO4)₃), carbon fluoride, metal fluorides such as iron fluoride (FeF₃), metal oxide, sulfur, and combination thereof. Doped and non-stoichiometric variations of these positive and negative active materials may be used as well. Examples of dopants includes elements from the groups III and V of the periodic table (e.g., boron, aluminum, gallium, indium, thallium, phosphorous, arsenic, antimony, and bismuth) as well as other appropriate dopants (e.g., sulfur and selenium).

In certain embodiments, the coating forms multiple joint structures where at least two coating layers covering nearby template structures overlap. Furthermore, the coating may also be deposited on a substrate, if one is present near the template. In this case, join structures can also form at the substrate interface. In other words, the coating can be described as an interconnected network of multiple layers formed around the template structures and, in certain embodiments, a layer formed on the substrate surface. The layers formed around the templates in turn form shells or parts of the shells of the resulting interconnected hollow nanostructures. A particular example of this process and corresponding structures will now be explained in more detail in the context of FIGS. 3A and 3B.

FIG. 3A illustrates an initial assembly 301 that includes a substrate 302 and two template structures 304a and 304b prior to formation of the active material coating around the structures. In certain embodiments, this assembly 301 is provided as a template. The structures 304a and 304b are shown to have variable spacing between the structures and between the bottom structure 304a and the substrate 302. In some areas this spacing is less than two thicknesses of the high capacity coating, which will result in formation of joint structures in these locations.

FIG. 3B illustrates a processed assembly 303 after forming the high capacity coating that includes three layers 306a, 306b, and 306c. The original template structures 304a and 304b may or may not be present in this assembly 303. The coating layers are shown to form two joint structures 308 and 310. Specifically, the joint structure 308 is formed when the layers 306a and 306b overlap. As indicated above, the template structures 304a and 304b were spaced apart by less than two coating thicknesses at this location. Likewise, the joint structure 310 was formed when layers 306a and 306c overlap caused by the spacing between the bottom template structure 304a and the substrate 302. These joint structures 308 and 310 can provide both mechanical support for the resulting hollow nanostructures and electronic pathways between the lithiation sites and the substrate 302.

In certain embodiments (not shown), a template may include at least two different types of template structures. One type may have large surface areas available for coating, i.e., surface template structures. These surface template structures can be larger, have higher aspect ratios, and have predominant presence in the template in order to provide enough surface area. Another type of structures may be primarily used to increase a number of joint structures formed in the electrode layer, i.e., interconnecting template structures. Interconnecting template structures may be generally smaller and have low aspect ratios in order to fit between the surface template structures. For example, nanofibers may be used in combination with nanoparticles as a composite template to achieve this result.

High capacity coating may be formed using various deposition techniques, such as chemical vapor deposition (CVD), which includes plasma enhanced CVD (PECVD) and thermal CVD, electroplating, electroless plating, and/or solution deposition techniques. PECVD technique examples will now be described in more details. A template is heated to between about 200°C and 400°C or, more specifically, to between about 250°C and 350°C. A process gas with a silicon containing precursor (e.g., silane) and one or more carrier gases (e.g., argon, nitrogen, helium, and carbon dioxide) is introduced into the process chamber. In a specific example, a combination of silane and helium is used with a silane concentration of between about 5% and 20%, or more particularly between about 8% and 15%. The process gas may also include a dopant containing material, such as phosphine. The chamber pressure may be maintained at between about 0.1 Torr to 10 Torr or, more specifically, at between about 0.5 Torr and 2 Torr. To enhance silane decomposition, plasma may be ignited in the chamber. Using plasma may help lowering the template temperature, which may be important to preserve template integrity. In certain embodiments, a pulsed PECVD method is employed.

The following process (i.e., RF power and flow rates) parameters are provided for a STS MESC Multiplex CVD system available from Surface Technology Systems in Newport, United Kingdom. This system can process templates / substrates that are up to four inches in diameter. It should be understood by one having ordinary skills in the art that these process parameters can be scaled up or down for other types chambers and substrate sizes. The RF power may be maintained at between about 10W and 100W and the overall process gas flow rate may be kept at between about 200 sccm and 1 000 sccm or, more particularly, at between about 400 sccm and 700 sccm.

In a specific embodiment, forming an amorphous silicon coating is performed in a process chamber maintained at a pressure of about 1 Torr. The process gas contains about 50 sccm of silane and about 500 sccm of helium. In order to dope the active material, about 50 sccm of 15% phosphine may be added to the process gas. The substrate is kept at about 300°C. The RF power level is set to about 50 Watts.

As mentioned above, it is sometimes needed to control process conditions, at least initially, during operation 106 in order to avoid major shape distortions of template structures, especially polymer-based template structures. At some point during the coating formation operating, an initially formed coating can be relied on for further mechanical support, and the process conditions can be adjusted without further concerns about the shape distortions. For example, the process conditions may be adjusted to increase the deposition rate of the coating.

In certain embodiments, operation 106 involves two or more stages performed using different process conditions, e.g., an initial deposition stage and a bulk deposition stage, also termed a first stage and a second stage. In one example, forming the high capacity coating begins at a lower temperature and, at some point during operation 106, the temperature is increased. The changes in the process conditions may be gradual or stepwise. The changes may be implemented when at least about 10% of the coating is formed or, more particularly, when at least about 25%) or even when at least about 50% of the coating layer is formed (e.g., based on the coating thickness or weight). In certain embodiments, the initial stage is performed when the template is heated to less than about 250°C or, more particularly, to less than about 200°C or even to less than about 150°C. The temperature may be then increased to at least about 150°C or, more particularly, to at least about 200°C or even to at least about 250°C. The initial deposition stage will generally be performed under conditions that maintain the physical integrity of the template. In such embodiments, those conditions are maintained until the coating becomes self-supporting. After that point, more aggressive conditions may be employed to, e.g., increase the deposition rate. These more aggressive conditions in the bulk deposition stage can be employed without regard to the physical integrity of the template. Note that the template is largely sacrificial in many embodiments. After it serves the role of defining a form for the active material, it becomes expendable.

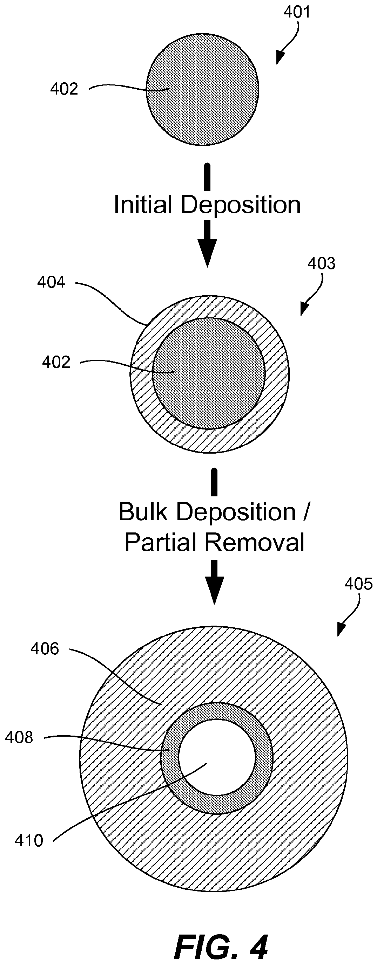

FIG. 4 is a schematic representation of a structure at three illustrative stages of the electrode layer fabrication process in accordance with certain embodiments, which show an example of the template deformation, more specifically partial removal of the template, during the coating operation. It should be noted that in general the template can be partially or completely removed and/or shrunk during the coating formation. Alternatively, the template may remain completely intact during this operation. In these later embodiments, the template is then at least partially or completely removed and/or shrunk in later operations. It should be noted that in addition or instead of changing the template shape, the template may also change its composition during operation 106, e.g., carbonize, or during later operations.

The first stage 401 shows an uncoated template structure 402. This stage may exist prior to initiating operation 106. The template structure 402 may be solid as shown in FIG. 4 or hollow (not shown). At the second illustrative stage 403, the same template structure 402 is shown with a thin coating 404 of the high capacity material formed around the structure 402. As mentioned above, the process conditions may be selected such that no substantial shape deformation to the template structure 402 appears at this stage. At this stage 403, the initially formed coating 404 may be sufficiently strong to support itself with or without any help from the structure 402. The process conditions, therefore, can be changed at this point. The new process conditions may cause substrate removal and/or shrinkage of the template, which results in a cavity 410 formed within the remaining template structure 408 as shown in the third illustrative stage 405. Most of the coating may be formed in between the second and third stages resulting in the final coating 406.

Returning to FIG. 1, the process 100 may continue with partial or complete removal and/or shrinkage of the template material from the electrode layer in operation 108. This operation is optional. As noted above, removal and/or shrinking may also occur during the coating formation in operation 106. In certain embodiments, no additional removal and/or shrinkage are needed. In other embodiments, removal and/or shrinkage occur during operation 106 and again in operation 108. In yet other embodiments, removal and/or shrinkage are performed only during operation 108 and the template stays intact during operation 106. For example, a metallic template used to form an amorphous silicon layer may be unaffected by the layer formation and can be removed later by etching.

A removal / shrinking technique during operation 108 depends, in part, on template and coating materials. For example, polymeric templates can be burned out or annealed at high temperature, e.g., by heating to at least about 300°C or, more particularly, to at least about 400°C or even to at least about 500°C. It may take at least about 1 hour or, more particularly, at least about 4 hours to burn out sufficient amount of the template materials. In certain embodiments, a template (e.g., a metallic template) is removed by chemical etching. For example, a silicon oxide core template may be etched by a hydrofluoric (HF) acid solution. In general, acid solutions can be used to etch away various metal or silicide fibers used as initial templates.

In certain embodiments, substantially all template material is removed from the nanotubular structure. In other embodiments, a portion of the template material remains. It should be noted that this remaining material may have a different composition than initial template materials (e.g., a polymer may be converted into carbon, etc.). In the same or other embodiments, residual template materials or their derivatives make up less than about 25% or, more particularly, less than about 10% by weight of the electrode layer. These residual materials may be used to enhance electronic conductivity and electrochemical capacity to the electrode layer, protect from undesirable SEI layer formations, limited the structural change (such as volume expansion), and other purposes.

The process 100 may continue with forming a second coating over the interconnected hollow nanostructures in operation 110. A second coating may be formed on the outer surfaces of the nanostructures and therefore referred to as an outer coating. In general, the second coating may include carbon, metals (e.g., copper, titanium), metal oxides (e.g., titanium oxide, silicon oxide), and metal nitrides, and metal carbides. In certain embodiments, a carbon content of the outer coating is at least about 50% or, in more specific embodiments, at least about 90% or at least about 99%. In certain specific embodiments, the outer coating may include graphite, graphene, graphene oxide, metal oxide (e.g., titanium oxide), and or other materials. The outer coating may coat substantially all exposed surface (e.g., all outside surfaces or both inside and outside surfaces) of the interconnected hollow nanostructures. In certain embodiments, the thickness of the outer coating is between about 1 nanometer and 100 nanometers or, in more specific embodiments between about 2 nanometers and 50 nanometers. Specifically, the outer coating could be used to prevent a direct contact of the high capacity coating with solvents of the electrolyte (and forming a detrimental SEI layer) yet to allow electro-active ions to pass to and from the high capacity coating.

A technique for forming an outer coating may involve depositing carbon based small molecules (e.g., sugars) or polymers followed by annealing. Another technique may involve carbon-based gas pyrolysis (e.g., using acetylene). For example, a carbon containing outer coating may be formed using methane, ethane, or any other suitable carbon containing precursors passed over nickel, chromium, molybdenum, or any other suitable catalysts (or no catalyst at all) and deposit a carbon layer over the nanostructures. Other methods include coating the nanostructures with organic media, which are later baked leaving carbon residue. For example, interconnected nanostructures may be dipped into a glucose or polymer solution. After allowing the solution to penetrate into the nanowire mesh, it is removed from the solution and baked. Glucose leaves carbon residues on the nanostructures. Outer coatings containing oxides, such as titanium oxide, may start with depositing a base material (e.g., titanium) from a solution, using an atomic layer deposition (ALD), or metal plating. Oxides of the base materials are then formed, for example, by exposing the deposit to oxidants at elevated temperature. Silicon oxide can be formed during operation 108 and/or other coating operations that involve, for example, CVD, ALD, or other deposition techniques.

Other operations in the process 100 that are specifically reflected in FIG. 1 may include compressing the electrode layer, further functionalizing the layer, and forming a battery electrode out of the electrode layer. Additional downstream operations are explained below in the context of electrode and battery arrangement description.

### Electrode Layer Examples

The process described above can be used to prepare an electrode layer of interconnected hollow nanostructures containing high capacity active material. Hollow nanostructures can have a shape of hollow spheres, tubes, or other shapes, both regular and irregular. A largest inner cross-sectional dimension of the cavities (e.g., an inner diameter for round structures) of the hollow nanostructures may be between about 1 nanometer and 1000 nanometers or, more particularly, between about 5 nanometers and 500 nanometers or even between about 10 nanometers and 100 nanometers. The cavities provide free space for active materials to expand into without causing substantial interference (e.g., pushing on) to other nanostructures or causing pulverization of the nanostructure itself. In specific embodiments, some or all of the hollow nanostructures (e.g., at least about 50% of them) have cross-sectional dimensions and/or sizes of openings into the hollow cavities that are too small for electrolyte to penetrate and fill the hollow cavities when the electrode layer is assembled into a battery. As such, the hollow cavities of the hollow nanostructures may remain substantially free from electrolyte, at least during normal battery operation.

In certain embodiments, the hollow nanostructures have a defined shell thickness. While other dimensions of the nanostructures may be sufficiently large (e.g., several micrometer and even millimeters), the shell thickness is generally less than about 1000 nanometers. As mentioned above, a thin shell may minimize pulverization of the high capacity active materials during cycling. In certain embodiments, shells have a thickness of between about 5 nanometers and 1000 nanometers on average or, more particularly, between about 10 nanometers and 500 nanometers or even between about 50 nanometers and 250 nanometers. A porosity of the electrode layer may be between about 20% and 90%) including the hollow cavities of the nanostructures. In more specific embodiments, the porosity is between about 40% and 80%.

In certain embodiments, nanostructures have a substantially tubular shape. These nanotubes can be at least about 100 nanometers long or, more particularly, at least about 1 micrometer long or even at least about 50 micrometers long. The nanotubes may have joint structures along their lengths. The joint structures provide physical or metallurgical bonding between adjacent nanostructures. Generally, the joint structure provides a direct electronic pathway between the adjacent structures, without requiring the presence of an external conductive agent (such as carbon black) to provide a conductive pathway between the adjacent structures.

An electrode layer may be bound to a conductive substrate. In certain embodiments, a conductive substrate has two electrode layers on each side of the substrate. Various substrate examples are provided above. Electrode layers, which are sometimes referred to as active layers, can be used as positive or negative electrodes in a battery as well as solid electrolytes, which are further described below.

Rechargeable batteries assembled with these novel electrode layers can maintain a stable electrochemical capacity of at least about 2000 mAh/g for at least 100 cycles (based on the total weight of all active materials present in the electrode layer). In the same or other embodiments, batteries can maintain a stable electrochemical capacity of at least about 700 mAh/g for at least about 100 cycles.

### Electrode and Battery Arrangements

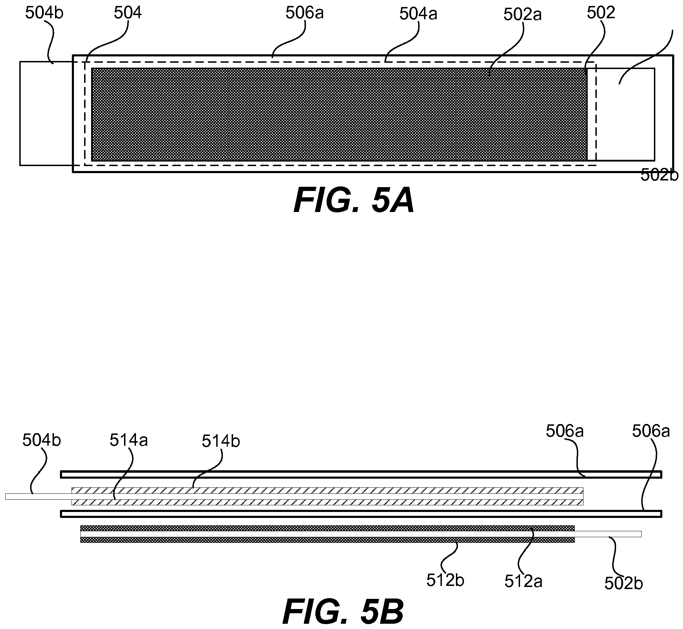

Electrode layer described above can be used to form positive and/or negative battery electrodes. The battery electrodes are then typically assembled into a stack or a jelly roll. FIG. 5A illustrates a side view of an aligned stack including a positive electrode 502, a negative electrode 504, and two sheets of the separator 506a and 506b in accordance with certain embodiments. The positive electrode 502 may have a positive electrode layer 502a and a positive uncoated substrate portion 502b. Similarly, the negative electrode 504 may have a negative electrode layer 504a and a negative uncoated substrate portion 504b. In many embodiments, the exposed area of the negative electrode layer 504a is slightly larger that the exposed area of the positive electrode layer 502a to ensure trapping of the lithium ions released from the positive electrode layer 502a by insertion material of the negative electrode layer 504a. In one embodiment, the negative electrode layer 504a extends at least between about 0.25 and 5 mm beyond the positive electrode layer 502a in one or more directions (typically all directions). In a more specific embodiment, the negative layer extends beyond the positive layer by between about 1 and 2 mm in one or more directions. In certain embodiments, the edges of the separator sheets 506a and 506b extend beyond the outer edges of at least the negative electrode layer 504a to provide electronic insulation of the electrode from the other battery components. The positive uncoated portion 502b may be used for connecting to the positive terminal and may extend beyond negative electrode 504 and / or the separator sheets 506a and 506b. Likewise, the negative uncoated portion 504b may be used for connecting to the negative terminal and may extend beyond positive electrode 502 and / or the separator sheets 506a and 506b.

FIG. 5B illustrates a top view of the aligned stack. The positive electrode 502 is shown with two positive electrode layers 512a and 512b on opposite sides of the flat positive current collector 502b. Similarly, the negative electrode 504 is shown with two negative electrode layer 514a and 514b on opposite sides of the flat negative current collector. Any gaps between the positive electrode layer 512a, its corresponding separator sheet 506a, and the corresponding negative electrode layer 514a are usually minimal to non-existent, especially after the first cycle of the cell. The electrodes and the separators are either tightly would together in a jelly roll or are positioned in a stack that is then inserted into a tight case. The electrodes and the separator tend to swell inside the case after the electrolyte is introduced and the first cycles remove any gaps or dry areas as lithium ions cycle the two electrodes and through the separator.

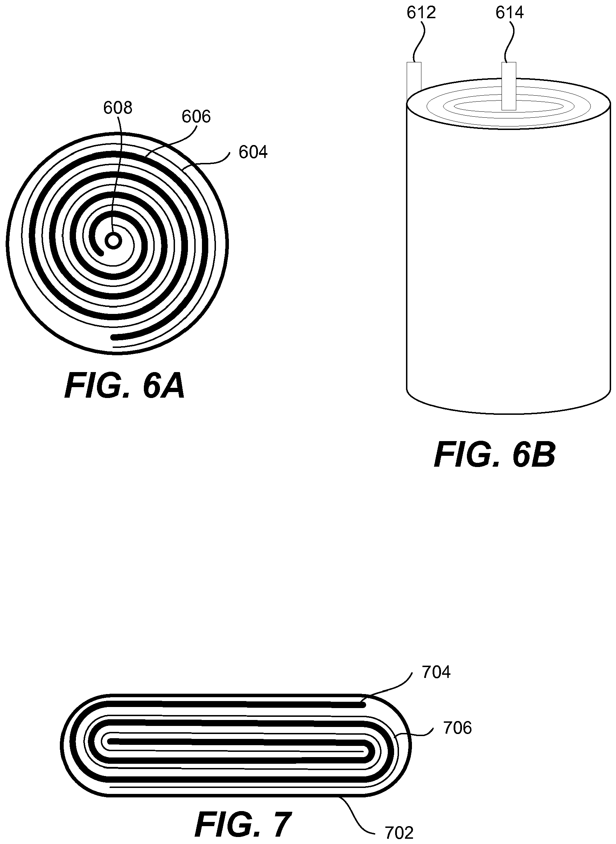

A wound design is a common arrangement. Long and narrow electrodes are wound together with two sheets of separator into a sub-assembly, sometimes referred to as a jellyroll, shaped and sized according to the internal dimensions of a curved, often cylindrical, case. FIG 6A shows a top view of a jelly roll comprising a positive electrode 606 and a negative electrode 604. The white spaces between the electrodes represent the separator sheets. The jelly roll is inserted into a case 602. In some embodiments, the jellyroll may have a mandrel 608 inserted in the center that establishes an initial winding diameter and prevents the inner winds from occupying the center axial region. The mandrel 608 may be made of conductive material, and, in some embodiments, it may be a part of a cell terminal. FIG 6B presents a perspective view of the jelly roll with a positive tab 612 and a negative tab 614 extending from the jelly roll. The tabs may be welded to the uncoated portions of the electrode substrates.

The length and width of the electrodes depend on the overall dimensions of the cell and thicknesses of electrode layers and current collector. For example, a conventional 18650 cell with 18 mm diameter and 65 mm length may have electrodes that are between about 300 and 1000 mm long. Shorter electrodes corresponding to low rate / higher capacity applications are thicker and have fewer winds.

A cylindrical design may be desirable for some lithium ion cells because the electrodes swell during cycling and exert pressure on the casing. A round casing may be made sufficiently thin and still maintain sufficient pressure. Prismatic cells may be similarly wound, but their case may bend along the longer sides from the internal pressure. Moreover, the pressure may not be even within different parts of the cells and the corners of the prismatic cell may be left empty. Empty pockets may not be desirable within the lithium ions cells because electrodes tend to be unevenly pushed into these pockets during electrode swelling. Moreover, the electrolyte may aggregate and leave dry areas between the electrodes in the pockets negative effecting lithium ion transport between the electrodes. Nevertheless, for certain applications, such as those dictated by rectangular form factors, prismatic cells are appropriate. In some embodiments, prismatic cells employ stacks rectangular electrodes and separator sheets to avoid some of the difficulties encountered with wound prismatic cells.

FIG 7 illustrates a top view of a wound prismatic jellyroll. The jelly roll comprises a positive electrode 704 and a negative electrode 706. The white space between the electrodes is representative of the separator sheets. The jelly roll is inserted into a rectangular prismatic case. Unlike cylindrical jellyrolls shown in FIGS 6A and 6B, the winding of the prismatic jellyroll starts with a flat extended section in the middle of the jelly roll. In one embodiment, the jelly roll may include a mandrel (not shown) in the middle of the jellyroll onto which the electrodes and separator are wound.

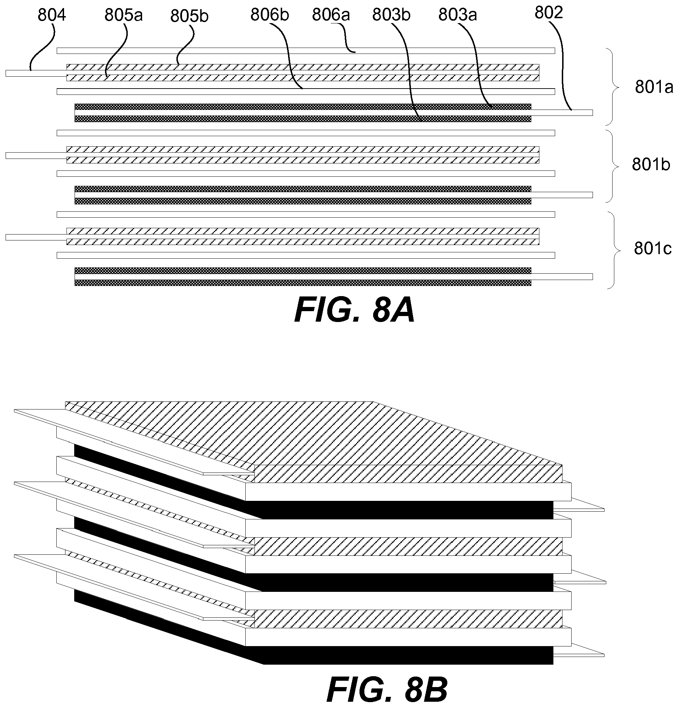

FIG 8A illustrates a side view of a stacked cell including a plurality of sets (801a, 801b, and 801c) of alternating positive and negative electrodes and a separator in between the electrodes. One advantage of a stacked cell is that its stack can be made to almost any shape, and is particularly suitable for prismatic cells. However, such cell typically requires multiple sets of positive and negative electrodes and a more complicated alignment of the electrodes. The current collector tabs typically extend from each electrode and connected to an overall current collector leading to the cell terminal.

Once the electrodes are arranged as described above, the cell is filled with electrolyte. The electrolyte in lithium ions cells may be liquid, solid, or gel. The lithium ion cells with the solid electrolyte also referred to as a lithium polymer cells.

A typical liquid electrolyte comprises one or more solvents and one or more salts, at least one of which includes lithium. During the first charge cycle (sometimes referred to as a formation cycle), the organic solvent in the electrolyte can partially decompose on the negative electrode surface to form a solid electrolyte interphase layer (SEI layer). The interphase is generally electrically insulating but ionically conductive, allowing lithium ions to pass through. The interphase also prevents decomposition of the electrolyte in the later charging sub-cycles.

Some examples of non-aqueous solvents suitable for some lithium ion cells include the following: cyclic carbonates (e.g., ethylene carbonate (EC), propylene carbonate (PC), butylene carbonate (BC) and vinylethylene carbonate (VEC)), vinylene carbonate (VC), lactones (e.g., gamma-butyrolactone (GBL), gamma-valerolactone (GVL) and alpha-angelica lactone (AGL)), linear carbonates (e.g., dimethyl carbonate (DMC), methyl ethyl carbonate (MEC), diethyl carbonate (DEC), methyl propyl carbonate (MPC), dipropyl carbonate (DPC), methyl butyl carbonate (NBC) and dibutyl carbonate (DBC)), ethers (e.g., tetrahydrofuran (THF), 2-methyltetrahydrofuran, 1,4-dioxane, 1,2-dimethoxyethane (DME), 1,2-diethoxyethane and 1,2-dibutoxyethane), nitrites (e.g., acetonitrile and adiponitrile) linear esters (e.g., methyl propionate, methyl pivalate, butyl pivalate and octyl pivalate), amides (e.g., dimethyl formamide), organic phosphates (e.g., trimethyl phosphate and trioctyl phosphate), and organic compounds containing an S=O group (e.g., dimethyl sulfone and divinyl sulfone), and combinations thereof.

Non-aqueous liquid solvents can be employed in combination. Examples of the combinations include combinations of cyclic carbonate-linear carbonate, cyclic carbonate-lactone, cyclic carbonate-lactone-linear carbonate, cyclic carbonate-linear carbonate-lactone, cyclic carbonate-linear carbonate-ether, and cyclic carbonate-linear carbonate-linear ester. In one embodiment, a cyclic carbonate may be combined with a linear ester. Moreover, a cyclic carbonate may be combined with a lactone and a linear ester. In a specific embodiment, the ratio of a cyclic carbonate to a linear ester is between about 1:9 to 10:0, preferably 2:8 to 7:3, by volume.

A salt for liquid electrolytes may include one or more of the following: LiPF₆, LiBF₄, LiClO₄ LiAsF₆, LiN(CF₃SO₂)₂, LiN(C₂F₅SO₂)₂, LiCF₃SO₃, LiC(CF₃SO₂)₃, LiPF₄(CF₃)₂, LiPF₃(C₂F₅)₃, LiPF₃(CF₃)₃, LiPF₃(iso-C₃F₇)₃, LiPF₅(iso-C₃F₇), lithium salts having cyclic alkyl groups (e.g., (CF₂)₂(SO₂)₂ₓLi and (CF₂)₃(SO₂)₂ₓLi), and combination of thereof. Common combinations include LiPF₆ and LiBF₄, LiPF₆ and LiN(CF₃SO₂)₂, LiBF₄ and LiN(CF₃SO₂)₂.

In one embodiment the total concentration of salt in a liquid nonaqueous solvent (or combination of solvents) is at least about 0.3 M; in a more specific embodiment, the salt concentration is at least about 0.7M. The upper concentration limit may be driven by a solubility limit or may be no greater than about 2.5 M; in a more specific embodiment, no more than about 1.5 M.

A solid electrolyte is typically used without the separator because it serves as the separator itself. It is electrically insulating, ionically conductive, and electrochemically stable. In the solid electrolyte configuration, a lithium containing salt, which could be the same as for the liquid electrolyte cells described above, is employed but rather than being dissolved in an organic solvent, it is held in a solid polymer composite. Examples of solid polymer electrolytes may be ionically conductive polymers prepared from monomers containing atoms having lone pairs of electrons available for the lithium ions of electrolyte salts to attach to and move between during conduction, such as Polyvinylidene fluoride (PVDF) or chloride or copolymer of their derivatives, Poly(chlorotrifluoroethylene), poly(ethylene-chlorotrifluoro-ethylene), or poly(fluorinated ethylene-propylene), Polyethylene oxide (PEO) and oxymethylene linked PEO, PEO-PPO-PEO crosslinked with trifunctional urethane, Poly(bis(methoxy-ethoxy-ethoxide))-phosphazene (MEEP), Triol-type PEO crosslinked with difunctional urethane, Poly((oligo)oxyethylene)methacrylate-co-alkali metal methacrylate, Polyacrylonitrile (PAN), Polymethylmethacrylate (PNMA), Polymethylacrylonitrile (PMAN), Polysiloxanes and their copolymers and derivatives, Acrylate-based polymer, other similar solvent-free polymers, combinations of the foregoing polymers either condensed or cross-linked to form a different polymer, and physical mixtures of any of the foregoing polymers. Other less conductive polymers may be used in combination with the above polymers to improve strength of thin laminates include: polyester (PET), polypropylene (PP), polyethylene napthalate (PEN), polyvinylidene fluoride (PVDF), polycarbonate (PC), polyphenylene sulfide (PPS), and polytetrafluoroethylene (PTFE).

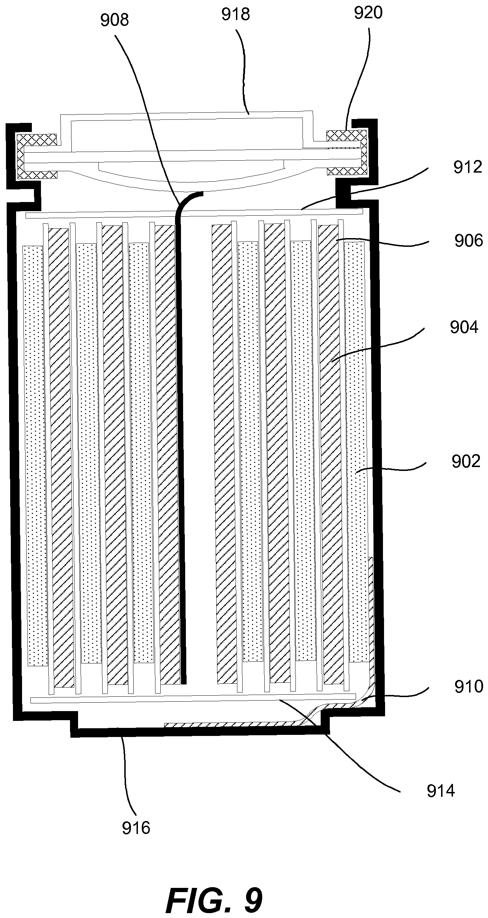

FIG. 9 illustrates a cross-section view of the wound cylindrical cell in accordance with one embodiment. A jelly roll comprises a spirally wound positive electrode 902, a negative electrode 904, and two sheets of the separator 906. The jelly roll is inserted into a cell case 916, and a cap 918 and gasket 920 are used to seal the cell. It should be note that in certain embodiments a cell is not sealed until after subsequent operations (i.e., operation 208). In some cases, cap 912 or case 916 includes a safety device. For example, a safety vent or burst valve may be employed to break open if excessive pressure builds up in the battery. In certain embodiments, a one-way gas release valve is included to release oxygen released during activation of the positive material. Also, a positive thermal coefficient (PTC) device may be incorporated into the conductive pathway of cap 918 to reduce the damage that might result if the cell suffered a short circuit. The external surface of the cap 918 may used as the positive terminal, while the external surface of the cell case 916 may serve as the negative terminal. In an alternative embodiment, the polarity of the battery is reversed and the external surface of the cap 918 is used as the negative terminal, while the external surface of the cell case 916 serves as the positive terminal. Tabs 908 and 910 may be used to establish a connection between the positive and negative electrodes and the corresponding terminals. Appropriate insulating gaskets 914 and 912 may be inserted to prevent the possibility of internal shorting. For example, a Kapton™ film may used for internal insulation. During fabrication, the cap 918 may be crimped to the case 916 in order to seal the cell. However prior to this operation, electrolyte (not shown) is added to fill the porous spaces of the jelly roll.

A rigid case is typically required for lithium ion cells, while lithium polymer cells may be packed into a flexible, foil-type (polymer laminate) case. A variety of materials can be chosen for the case. For lithium-ion batteries, Ti-6-4, other Ti alloys, Al, Al alloys, and 300 series stainless steels may be suitable for the positive conductive case portions and end caps, and commercially pure Ti, Ti alloys, Cu, Al, Al alloys, Ni, Pb, and stainless steels may be suitable for the negative conductive case portions and end caps.

In addition to the battery applications described above, metal silicides may be used in fuel cells (e.g., for negative electrodes, positive electrodes, and electrolytes), hetero-junction solar cell active materials, various forms of current collectors, and/or absorption coatings. Some of these applications can benefit from a high surface area provided by metal silicide structures, high conductivity of silicide materials, and fast inexpensive deposition techniques.

### Electrospinning

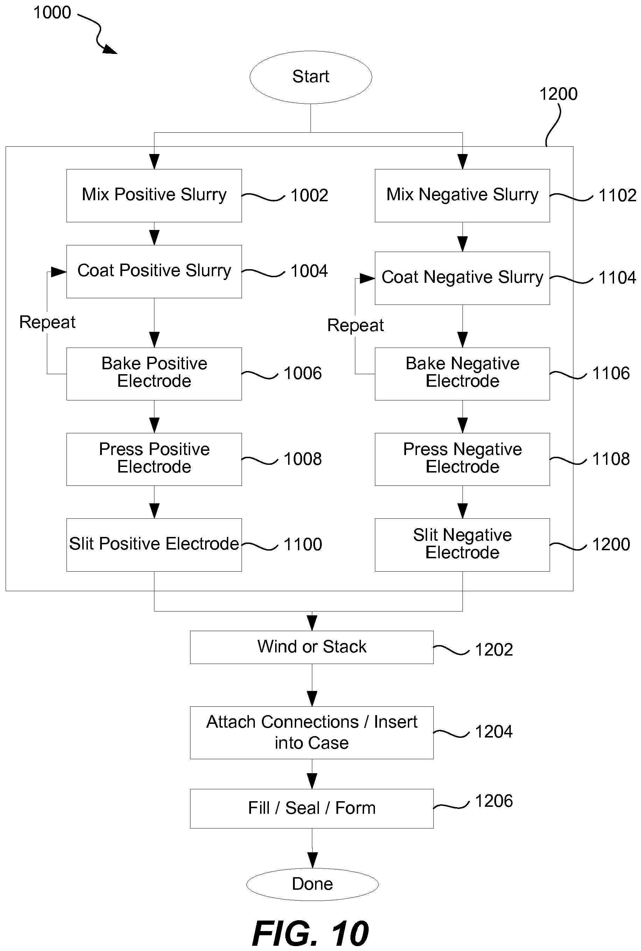

A typical process 1000 for electrochemical cell fabrication is illustrated in FIG. 10. It involves multiple operations to prepare two electrodes and then assemble these electrodes into a complete cell. The electrode preparation part 1200 of fabrication is particularly labor intensive. Typically, a process starts with mixing active materials into slurries (blocks 1002 and 1102) and coating these slurries onto the corresponding substrates (blocks 1004 and 1104). The coated slurries are baked to evaporate solvent and to form a solid coating (block 1006 and 1106). The process of coating and baking is repeated on the second side of each electrode. The electrodes may then undergo pressing (blocks 1008 and 1108) and slitting (blocks 1100 and 1200). Positive and negative electrodes can be then stacked or wound together (block 1202) and processed into an operational cell by attaching electrical connections and positioning the resulting electrode assembly into a case block 1204) and then by filling with electrolyte, sealing, and performing formation charge/discharge cycles (i.e., "forming" a cell) (block 1206).

The illustrated process does not include any upstream operations for preparing active materials, such as forming structures (e.g., particles, fibers) with desired sizes and compositions. These operations further complicate the electrode preparation phase 1200 of cell fabrication. Moreover, certain materials and shapes (e.g., long fibers) can not be easily processed using traditional processing techniques.

In certain examples, different operations than the ones illustrated in FIG. 10 are used for electrode preparations. For examples, substrate-rooted nanowires may be directly deposited onto a substrate from precursor materials. Some of these processes are described in US Patent Application No. 12/437,529, filed May 07, 2009 and US Patent application No. 61/181,637, filed May 27, 2009, which describe active materials and electrode structures as well as the corresponding fabrication processes.

Active materials formed as nanostructures, and more specifically as nanofibers, exhibit certain unique and unexpected electrochemical properties and may be highly desirable for certain electrode applications. For example, silicon nanowires can be formed in such way that they do not experience stress levels above the silicon fracture limit during lithium insertion in high capacity anodes with good cycling properties. Further, replacing particles with elongated structures (with one dimension being substantially larger than the two others) can improve other properties, including certain electrical and mechanical properties.

### Electrospinning Apparatus

It has been unexpectedly found that an electrospinning technology can be adapted to fabricate certain active materials and electrodes for use in electrochemical cells. The electrospinning process uses an electrical charge to draw a thin stream of liquid precursor, such as viscous or viscoelastic material, which later solidifies into a fiber, from the liquid. It shares certain characteristics of electro-spraying and conventional solution dry spinning. Electrospinning may involve both dissolved and molten precursors.

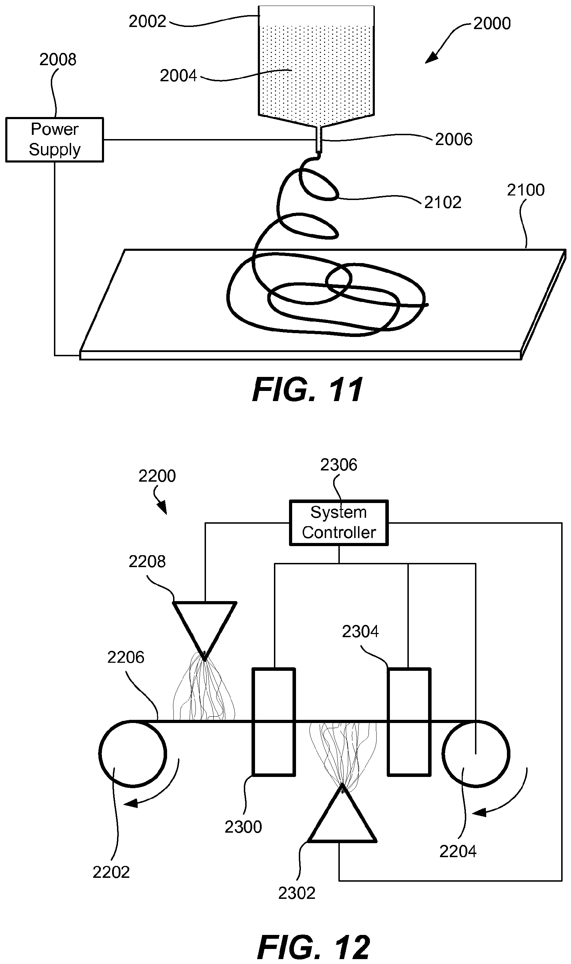

FIG. 11 shows an illustrative example of an electrospinning device 2000 in accordance with certain embodiments. The device may include a vessel 2002 for holding a liquid precursor 2004. The vessel 2002 may be a syringe, feeding tube, or any other suitable container. The vessel 2002 is replenished with a liquid precursor. A mechanism (not shown) may be used to ensure composition, consistency, viscosity, and other parameters of the liquid precursor 2004. The vessel 2002 may include one or more nozzles 2006 for delivering a thin stream of liquid from the vessel 2002. Each nozzle 2006 delivers an individual stream of the liquid precursor that solidifies into a fiber. In certain embodiments further described below, a stream and the resulting fiber may include a plurality of materials arranged in various combinations, such as a core-shell structure. A special combinational co-axial nozzle is used for this type of process.

A design of the nozzle affects dimensions, cross-section profile, and other parameters of the exiting stream and resulting fibers. In addition to the nozzle design, other process parameters that may be controlled in the electrospinning process include: polymer molecular weight, molecular weight distribution and structure, polymer solution properties (e.g., viscosity, conductivity, dielectric constant, surface tension), electric potential, flow rate, concentration, distance between needle and substrate, ambient temperature, and humidity, etc. Some of these parameters are further discussed below.

In some embodiments, fibers may form flattened / ribbon-like structures due to flattening during impact with a collector plate or forming a collapsible polymer skin. Examples of polymers and solvents with flattened morphology include: polyvinyl alcohol and water, poly ether imide and hexafluoro-2-propanol, nylon-6 and hexafluoro-2-propanol, polystyrene and dimethyl-formamide or tetrahydrofuran. Further certain polymers (e.g., polyvinylidene fluoride, poly 2-hydroxyethyl methacrylate, polystyrene, polyetherimide) can form branch like structures because of instability in a stream.

A number of nozzles, in addition to other factors, determines a rate of deposition. Multiple nozzles across the moving web may be used to provide an adequate deposition rate and ensure uniformity of nanofibers distribution across the web. In certain embodiments, a number of nozzles may be between about 1 and 1000, more specifically between 10 and 200, and even more specifically between 50 and 150. While a larger number of nozzle provide greater output (assuming the same diameter), which may be needed for high speed web deposition processes, in some embodiments, a large number of fibers may present difficulties in arranging individual fibers. For example, in battery fiber embodiments described below, each fiber is handled individually after deposition, which may restrict a number of nozzle used in parallel processes.

In certain embodiments, a nozzle 2006 is a metallic needle. Generally, a nozzle is made out of the conductive material. An internal diameter of the nozzle typically depends on the desired fiber diameter and certain process parameters listed above (e.g., viscosity, surface tension, applied voltage, distance). Another design parameter of the nozzle design is the shape of the tip, which may be a flat tip. A combination of these parameters are selected such that a Taylor cone formed by a liquid stream at the end of the tip provides a smooth stream of liquid that ensures continuity of the resulting fiber.

The nozzle 2006 is connected to a power supply 2008 (e.g., 5-50 kV). The power supply 2008 is also connected to a collector plate 2100 made of conductive material. The collector plate 2100 may be a rotating drum, moving web, or other shapes. Motion of the collector plate 2100 with respect to the nozzle 2006 provides even distribution and collection of the fibers. In certain embodiments, both the nozzle 2006 and the collector plate 2100 may be in motion.

In certain embodiments, one or more nozzles in the array of the nozzles may have its stream discontinued (i.e., "turned off ") while the remaining nozzles continue to deliver their streams. This may be accomplished by turning off the voltage applied to the specific nozzles that needs to be turned off. The cycling of streams in the array of the nozzles maybe used to accomplish a desired distribution of the fibers on the surface.

When a sufficiently high voltage is applied between the collector plate 2100 and the nozzle 2006, it may draw a stream of the liquid precursor 2004 out of the nozzle 2006 (i.e., the electrostatic force exceeds the surface tension). Initially, a droplet is formed on the nozzle. The droplet is then stretched and eventually erupts at a critical point forming a stream. A shape of the liquid at the point of eruption is sometimes referred to as the Taylor cone.

The voltage should be sufficiently high to overcome the surface tension of the liquid precursor at the tip of the nozzle and to pull the liquid into a stream. At the same time, it is generally desirable that the electrostatic force does not overcome the surface tension within the moving stream, such that a continuous stream is delivered to the collector plate. The stream of the precursor accelerates towards the plate, which may cause stretching and thinning. Further, the stream may be elongated by a "whipping" process caused by electrostatic repulsion within a stream initially causing small bends that further increase towards the collector.

The following list includes some parameters that are generally considered in electrospinning process: average molecular weight of a polymer in a liquid precursor (including molecular weight distribution and structural characteristics of the polymer), solution properties (e.g., viscosity, conductivity, and surface tension), electric potential, flow rates, distance between the nozzle and the collector plate, ambient conditions (temperature, humidity, and air flow), motion of the collector.

FIG. 12 illustrates an example of apparatus 2200 for electrospinning deposition of one or more layers of electrode materials on a moving web substrate. The apparatus 2200 includes an unwind roll 2202 supplying a substrate web 2206 to the deposition area and rewind roll 2204 collected the substrate with the deposited layers. The substrate web 2206 moves with a predetermined speed controlled by a system controller 2208 through the deposition area. In certain embodiments, the speed of the substrate web is between about 1 and 100 meters/min, or more specifically between about 2 and 30 meters / min.

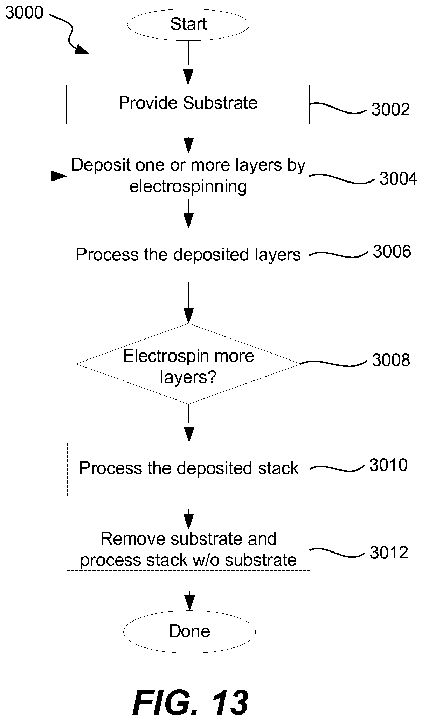

The apparatus 2200 may include one or more electrospinning units (elements 2208 and 2302) and one or more post-deposition processing units (elements 2300 and 2304). While FIG. 2 illustrates an apparatus with two electrospinning units depositing fibers on the opposite sides of the substrate and two post-deposition processing units, it should be understood that any number and configurations of such units may be used. Additional details are presented in the context of FIG. 13 below.

An electrospinning unit (elements 2208 and 2302) is configured to deposit one or more fibers onto the substrate 2206. In certain embodiments, the deposited fibers form an active layer with the electrode. An electrospinning unit is configured to ensure uniformity of the layer across and along the web of the substrate. For example, a unit may have a moving nozzle across the substrate width. Further, the apparatus may be equipped with a sensor measuring amount of fibers deposited on the substrate (e.g., laser backscatter, beta particles penetration, gamma backscatter) in various location on the substrate and adjust the deposition parameters accordingly.

A post-deposition processing unit (elements 2300 and 2304) may be used for converting deposited fibers to a new material and change form and/or function of the deposited. For example, such units may be used for sintering to convert deposited polymer-like fibers into ceramic fibers, evaporate remaining solvent, redistribute and/or compress the deposited layer, and perform other functions. Additional details of post-deposition operations are presented in the context of FIG. 13 below.

A substrate 2206 may be a metallic foil. In this case, one contact of the power supply, which may be a part of the system controller 2306 as illustrated in FIG. 12, is electrically coupled to the substrate 2206. For example, an electrical brush is provided below the deposition area to ensure sufficient voltage gradient between the deposition area and the corresponding nozzle. In some embodiments, a contact to the power supply may be established with one of the rolls. One contact point with the substrate may be sufficient to support multiple electrospinning units.

In other embodiments, the substrate 2206 is an insulating material. For example, the power supply may be attached to a conductive element (e.g., a plate, roll) that is positioned behind the substrate 2206.

Typically, electrospinning deposits fibers as nonwoven mats, in which the fibers are randomly oriented. In certain embodiments, a collector of the electrospinning apparatus includes a special feature, such as an insulating gap, that helps to uniaxially align deposited fibers.

A system controller 2306 may be also used to control the process parameters in electrodeposition units. Some of the process parameters are described above in the context of FIG. 11. Additional details of the electrospinning process and apparatus are described in US Patent No. 6,713,011, issued on March 30, 2004 to Chu, B., et. al., Ramakrishna, S., "Electrospinning and Nanofibers", published in 2005 by World Scientific Publishing Co., and Andrady, A., "Science and Technology of Polymer Nanofibers", published in 2008 by John Wiley & Sons.

### Process

FIG. 13 illustrates an example of a general process for depositing one or more layers (e.g., multiple electrode layers such as anode-separator-cathode, a single composite layer, or a combination of the two) in accordance with certain embodiments. The process may start with providing a substrate into a deposition area (block 3002). The deposition area is usually defined by a collector, which may be a substrate itself or a separate component of the apparatus positioned under the substrate (in the later case, the substrate is made of insulating materials). If the substrate acts as a collector (i.e., a voltage is applied between the substrate and the nozzles), then the deposition area may be defined by mechanical stops (e.g., walls preventing fibers from depositing outside of the area) or electrical shields (e.g., bias rings that reshape the electrical filed between the nozzle and the substrate).

The substrate may be an individual plate or a continuous web. In certain embodiments, the substrate is an intermediate carrier (e.g., a foil from which deposited fibers are later removed). In other embodiments, the substrate is a part of the electrode to which deposited fibers are permanently attached, such as a current collector of the electrode positioned in between the active layers, a previously deposited active layer, or any other element. A substrate may be a metallic foil (e.g., copper foil, stainless steel foil, aluminum foil, titanium foil), a polymer foil (e.g., Mylar film), a polymer paper (that may be converted to carbon after calcination), carbon fiber paper, carbon fiber mesh, and the like. The thickness of the substrate may be between about 1 µm and 1,000 µm or, in more specific embodiments, between about 5 µm and 100µm.

The process continues with electrospinning fibers onto the surface of the substrate to form one or more electrode layers (block 3004). Certain details of electrospinning are described above in the context of FIG. 11. In one embodiment, a layer of fibers is deposited on the substrate and the process continues with another operation, which is performed only on the layer of fibers. In another embodiment, two layers of fibers are deposited on the opposite sides of the substrate before proceeding to the next operation. One layer may be an anode active material layer and the other may be a cathode active material layer, for example. In some cases, a deposited layer requires annealing or some other post-treatment. In one example, a layer deposited on one side may be annealed or otherwise treated before depositing a layer on the other side. In another example, both layers are deposited and then treated together. Certain details of the annealing are described in the context of operation 3006. In some cases, the two separate layers are deposited on the same side of the substrate. This might be case when, for example, the first layer is an anode or cathode layer and the second layer is a separator layer.

Generally, one battery layer (e.g., a separator layer, an anode layer, or a cathode layer) is deposited before proceeding with another layer deposition. For example, an anode layer is deposited, followed by deposition of a separator layer, which then followed by deposition of a cathode layer. This approach helps to prevent electrical shorts between the anode and the cathode. Certain specific embodiments, which are referred to herein as "battery fibers" and further described above or below, may not generally follow this approach because one element of the fiber (i.e., a separator core) serves as a insulator.

In certain embodiments, a battery may include two more different types of fibers each containing a different component, and which form what is sometimes referred to as a composite electrode layer. These different fibers may be deposited in a single operation or a set of sequentially operations. For example, a plurality of jets above one deposition area may include jets with different materials. The composition of the layer may be controlled by turning certain jets off or on according to the procedures described above. For example, an anode layer may include silicon nanofibers and carbon nanofibers that are deposited in a single operation.

Orientation of fibers deposited on a substrate may be controlled with an electric field, e.g., changing applied voltage, applying voltage bias rings and other electrospinning apparatus elements that are designed to modify the field. Fiber orientation during deposition determines density, porosity, cross-linking, and other parameters of the deposited layer. In certain embodiments, these parameters are modified in one or more post-deposition operations.

After one or more layer is deposited in operation 3004, the process may include an optional operation to further process these layers (block 3006). For example, deposited layers may be converted to new materials by annealing, calcining, sintering, cooling, etc. In one example used to generate ceramic fibers, sintering is performed at between about 300°C and 700°C for between about 1 hour and 24 hours. In other embodiments, the post-deposition processing operation (block 3006) may involve compressing a deposited layer by passing it, for example, through a roll press or placed between two plates for a predetermined period of time. In certain embodiments, the press may be heated to between about 30°C and 300°C, more specifically between about 50°C and 150°C.

In other embodiments, a post-deposition processing operation (block 3006) includes depositing another material onto electrospun fibers. For example, carbon fiber electrospun in operation 3004 may be coated with amorphous silicon to form "core-shell" structures. Additional details on core-shell structures are described in US Patent application No. 61/181,637 referenced above. It should be noted that many core materials presented in that reference may be deposited using electrospinning. In certain embodiments, one or more shell materials may be formed together with the core using electrospinning. Post-deposition processing depends on the materials used in electrospinning that are further described below together with the corresponding post-deposition operations.

Operation 3004 and, optionally, operation 3006 may be repeated if additional layers need to be deposited (decision block 3008). For example, a first cycle (including operation 3004 and, optionally, operation 3006) may be used to deposit a layer of separator. The cycle may be then repeated to deposit a layer of anode materials, another layer of separator, and a layer of cathode materials. These layers are also referred to as battery layers. The four battery layers deposited in this process form a separator-anode-separator-cathode stack, which may be then processed into a jelly roll or stack.

In one embodiment, a stackable battery (containing one or more anode-separator-cathode stacks) may be built by repeating the cycle described above. The layers of the battery may be deposited until the desired number is achieved. This allows creation of batteries having uniquely defined form factors, and also allows elimination of certain mechanical operations typically used in arranging and handling the stack.

In certain embodiments, a single battery layer may be deposited in a multi-step or cyclic process instead of a single deposition operation. For example, a sub-layer may require an intermediate treatment (e.g., annealing, coating fibers with another materials, compressing) before the deposition can be continued.

Once, all electrospun layers are deposited on the substrate, the entire stack, which in certain embodiments may include only one layer, may be subjected to post deposition processing (block 3010). This operation is optional and, in some embodiments, the stack may be ready for use in battery electrodes immediately after operation 3004 and, optionally, operation 3006. Some forms of this processing have been already described in reference to operation 3006. The processing may be used to enhance mechanical and electrical contacts between the electrospun layers.

In certain embodiments, a stack includes multiple battery layers, for example, anode-separator, cathode-separator, anode-separator-cathode, anode-separator-cathode-separator. The entire stack is subjected to one or more post deposition treatments, such as annealing. Annealing may be performed at between about 300°C and 700°C to convert materials of the stack to ones desirable for battery applications. For example, a separator layer may be converted into an inorganic material, such as ceramic.

In some embodiments, the substrate may be removed from the stack (block 3012). This operation is optional and, in some embodiments, the stack may be used as an electrode material together with the substrate. For example, a metallic foil may be as a substrate and active materials are deposited on the surface of the foil. The foil may remain as a current collector in the resulting electrode.

### Battery Layer Examples

Materials are provided to an electrospinning apparatus in a liquid form, either as solution containing, e.g., a polymer base and a solvent or a melt. Polymer examples include: Nylon 4,6, Nylon 6, Nylon 6,6, Nylon 12, Polyacrylic acid, Polyacrylonitrile, Polyamide-6, Poly(benzimidazol), Polycarbonate, Poly(etherimide), Poly(ethyelene oxide), Poly(ethylene terephthalate), Polystyrene, Poly(styrene-butadiene-styrene) triblock copolymer, Polysulfone, Bisphenol-A, Poly(trimethylene terephthalate), Poly(urethane), Poly(urethane urea), Poly(vinyl alcohol), Poly(vinyl carbazole), Poly(vinyl chloride), Poly(vinyl pyrrolidone), Poly(vinylidene fluoride), Poly(vinylidne fluoride-co-hexafluoropropylne), Degradable Polyesterurethane, Poly(ε-caprolactone), Polydioxanone, Polyglycolide, Poly(L-lactic acid), Poly(D,L-lactide-co-glycolide), Poly(L-lactide-co-glycolide), Poly(lactic-co-glycolic acid), Poly(L-lactic-co-glycolic acid), Fibrinogen Fraction, Gelatin, Wheat Gluten. Solvent examples include: Formic acid, Hexafluoro-2-propanol, Ethanol, Dimethylformamide, Dimethyl acetamide, Dichloromethane, Chloroform, Tetahydrofuran, Trichloroethane, Water, Trifluoroacetic acid, t-Butylacetate, Chlorobenzene, Ethylacetate, Methylethylketone, Tetrahydrofuran, Methylene Chloride, Isopropyl alcohol, Hexafluoro-2-propanol, Hexafluoroisopropanol, Aqueous triethanolamine, Methylene Chloride, Trifluorethanol.

In one embodiment, a liquid precursor used in electrospinning is a slurry that includes a polymer base and small rod-like or elongated particles. These particles must be sufficiently small to pass through the nozzle of the electrospinning apparatus. For examples, round-like particles may be less than about 1 µm or, more specifically, less than about 100 nm. The diameter of elongated particles (e.g., nanowires) may be between about 5-1000 nm or, more specifically, between about 10 - 300nm. The length of elongated particles may be less than about 10 µm, more specifically less than about 5 µm, or even more specifically less than about 1 µm. In certain embodiments, the elongated particles are nanostructure and/or nanowires such as those described in US Patent Application No. 12/437,529, filed May 07, 2009 and US Patent application No. 61/181,637, filed May 27, 2009. These materials may be combined with a polymer base material, examples of which are listed above. In a specific example, nanowires may be coated with carbon before combining with a polymer base.

In another example, a core and one or more shells may be electrospun in a single operation. For example, two or more different materials may be co-spun from a special nozzle and form a core-shell structure immediately upon leaving the nozzle. A specific example of these embodiments, which is referred to as a "battery fiber", is described below. Other examples may include an active core (e.g., silicon) and a carbon shell, a carbon core and an active shell, and a carbon core-active shell-carbon outer shell. The core of some of these structures may have a diameter of less than about 200 nm. The thickness of the outer carbon shell may be less than about 50 nm. Certain examples of these structures are described in US Patent application No. 61/181,637, filed May 27, 2009. Such fibers may be generated in a single electrospun operation followed by one or more post-deposition treatments (e.g., calcining, sintering, annealing, cooling, or carbonizing) described above.

In certain embodiments, a homogeneous fiber may be electrospun and then treated in such way that only a part of the material in the fiber is transformed forming a core and a shell having different composition, morphological structure, or other properties.

Examples of materials used for electrospinning positive active layer includes: LiCoO-MgO, lithium titanate (LTO), and others. For example, LTO fibers can be produced by using titanium tetraisopropoxide and lithium hydroxide as precursors in the polymer mixture. The resulting polymer fiber may be calcined or sintered to create carbon fiber backbones. Within the fiber, the titanium precursor reacts with lithium hydroxide and produce LTO nanoparticles. This approach can be used to produce other cathode oxides such as lithium cobalt oxide, lithium manganese oxide and inorganic separator, such as aluminum oxide and silicon dioxide. Further, electrospinning may be used to produce LiFePO₄ fibers including various doped LiFePO₄ fibers such as those promoted by A123 Corporation. For example, pre-synthesized active materials using nanoparticles or nanowires can be mixed with the polymer solution to form a nanomaterial / polymer suspension (also referred to as a slurry or paste). Electrospinning of the mixed solution can generate polymer fibers with nanoparticles or nanowires embedded. The carbonizing step may be needed to convert the organic polymer to carbon.

Examples of materials used for electrospinning negative active layer include: silicon, carbon, germanium, tin, aluminum, tin oxide, alkoxysilanes as a Si precursor, and others. In certain embodiments, these materials are organized into core-shell structures such as silicon-core/carbon-shell, carbon-core/silicon-shell, or carbon-core/silicon-inner-shell/carbon-outer-shell. In the same or other embodiments, the entire layer or a part of the layer (e.g., a core, shell) may be a mixture of materials, such as a carbon and silicon. For example, a carbon may be mixed with titanium oxide.

Other examples of positive and negative active materials can be found in US Patent Application No. 12/437,529, filed May 07, 2009 and US Patent application No. 61/181,637, filed May 27, 2009.

Examples of materials used for electrospinning separator layer includes: PVDF, polypropylene, inorganic materials (SiO₂, Al₂O₃, TiO₂), organically modified ceramics (including oxides of Al, Si, Ti, and Zr modified with silicones and organic polymers), and others. Inorganic separator materials allow combining these materials with other layers (e.g., cathode and anode) and treating an entire stack together because these inorganic materials continue to obtain (to some degree) and continue to retain their ionic conductivity properties when being exposed to high temperatures involved in calcination, sintering, annealing, and carbonization.

Some examples of materials that can be deposited using electrospinning and subsequent treatments are provided in the table below.

**Table 1**

| Battery component | Principal material |
|---|---|
| Anode | Carbon, Silicon, Lithium Titanate, etc. |
| Cathode | Lithium Cobalt Oxide, Lithium Manganese Oxide, Lithium Iron Phosphate, Lithium Nickel-Cobalt-Aluminum Oxide, etc |
| Inorganic Separator | Inorganic: Silicon Dioxide, Aluminum Oxide, Titanium Oxide, etc |
| | Polymer-inorganic hybrid: polymer blended with the above inorganic materials. |

In certain embodiments, electrospun fibers have nanoscale diameters (e.g., less than about 1000 nanometers, or less than about 500 nanometers, or even less than about 100 nanometers). In the same or other embodiments, electrospun fibers have relative large lengths (e.g., at least about 10 millimeter, or at least about 1 centimeter, or even at least about 1 meter).

### Battery Fiber

A battery fiber is a fiber that contains multiple shells and, possibly, a core, such that at least two elements of this fiber (a core and a shell, or two shells) are electrically separated from each other by a core. A core that provides electrical separation functions as a separator and should provides ion migration between the two separated elements. One of the separated elements includes anode active materials, while another include cathode active materials. In certain embodiments, the inner element (out of the two separated elements) includes anode active materials, while in other examples the outer element includes anode materials.

The separated elements have sufficient conductivity to pass electrons along fiber lengths to the current collector. One current collector is attached to the anode element of the fiber, while another current collector is attached to the cathode element. A connection may be made an outer shell or to an extending core or inner shell containing of these elements. A fiber may be formed to a predetermined length (e.g., 100µm - 100 mm, or more specifically between 1-50 mm) by "turning" off or on corresponding parts of a nozzle, which is further described below. Further, an extended core or inner shell that is needed to establish one an electrical connection may be formed by synchronizing different parts of the nozzle.

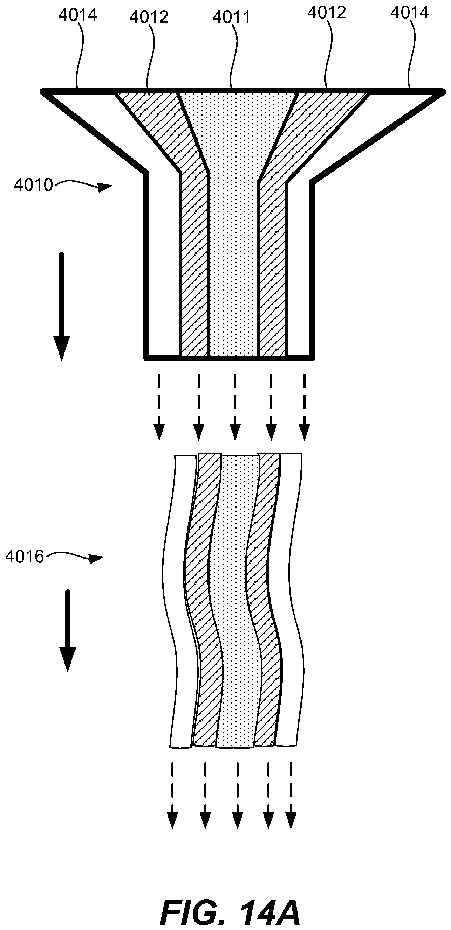

FIG. 14A is an illustrative representation of a battery fiber 4016 ejected from the electrospinning nozzle 4010. The nozzle 4010 is configured in such way that it delivers a core and at least two shells around this core in the exiting stream. For example, a nozzle 4010 may have a set of three concentric tubes. The inner tube may deliver material 4011 to form a core of the battery fiber. In certain embodiments, the core may result in a hollow cylinder after drying out the solvent and performing post-deposition treatments. In other embodiments, the inner tube may not deliver a material and a resulting battery fiber is without a core. The next innermost tube of the nozzle 4010 carries material 4012 for the innermost shell of the battery fiber 4016. The next tube carries material 4014 for the next shell. It should be understood that the nozzle may be designed to include additional tubes. Certain tubes, typically outer tubes, may protrude further than the inner tubes (not shown) in order to form the outer boundaries of the fiber, once the streams of multiple materials (e.g., 4011, 4012, 4014) are combined. Further, the longer tubes may slightly taper towards the opening end in order to bring the streams of multiple materials together. In the same or other embodiments, combining the layers into a single body is achieved by selecting polymers with desirable properties (surface tensions, viscosities), controlling the drying process in such way that materials "collapse" together, establishing voltage gradients between various tubes of the nozzle 4010.

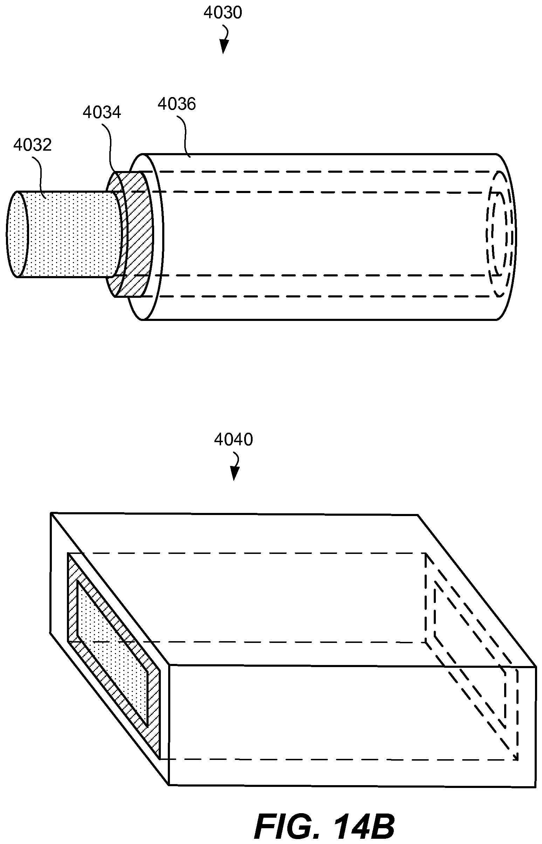

FIG. 14B illustrates two examples of battery fibers in accordance with certain embodiments. A battery fiber 4030 is shown to have a core 4032, an inner shell 4034, and an outer shell 4036, which form a set of concentric round cylinder. It should be understood that other shapes are possible that are not concentric, round, or form a complete closed shapes. For example, a core-shell structure may have one or more of the cores that not necessarily cover the inner core or shell. Additional shapes and forms of the core-shell structure are described in US Patent application No. 61/181,637, filed May 27, 2009.

As described above, a battery fiber includes at least two electrically separated elements. For example, the battery fiber 4030 may have a core 4032 with anode materials, an inner shell 4034 with separator materials, and an outer shell 4036 with cathode materials. Many of these materials are described above. Further, additional shells may be present, such that other elements of the core-shell structure include anode, separator, and cathode materials. In certain embodiments, a battery fiber may include multiple anode-separator-cathode layer combinations, such as anode core-separator shell 1 -cathode shell 2 - separator shell 3 - anode shell 4.

In certain embodiments, one or more inner layers of a fiber extend in order to form an electrical and mechanical connection and provide insulation between the layers. For example, FIG. 14B illustrates a battery fiber with a shell 4034 extending beyond the shell 4036 on one end. The core 4032 extends even further. It should be note that similar examples can be provided on both ends of the fiber. In the example, where the core 4032 includes anode material, the inner shell 4034 - separator, and outer shell - cathode, the extended portion of the core may be used to form an electrical connection to the core 4032 (and anode). Further, extending the separator (inner shell 4034) beyond the cathode (outer shell 4036) help to ensure electrical insulation between the cathode and anode of the nanowire.

In certain example, a battery fiber may have a flattened portion, for example as illustrated by a rectangular core-shell fiber 4040 in FIG. 14B. The flattened portion of such battery fibers may be formed during forming liquid streams (e.g., defined by a nozzle), flattened when collected on the collector (e.g., due to impact or pressed after collection), or during subsequent post-deposition treatment operations. In certain embodiments (not shown), the flattened battery nanofibers can be wound in to a jelly roll or stacked.

### Patched Deposition

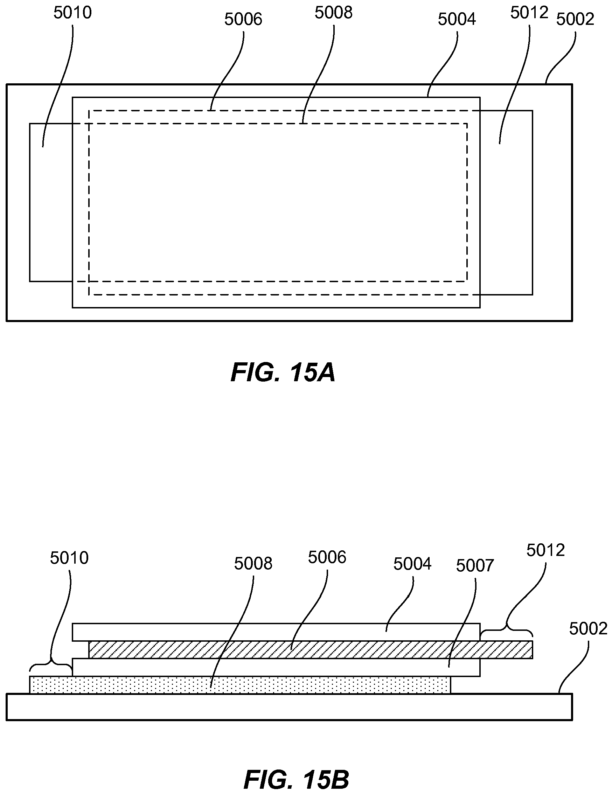

FIGS. 15A and 15B illustrate top and side views of a patch including a substrate 5002 and four battery layers (5004, 5006, 5007, and 5008) in accordance with certain embodiments. Such path may be formed during depositing the layers on the substrate using electrospinning process described above. Each layer may be an electrode layer. For example, the layer 5008 may include cathode materials, the layers 5004 and 5007 may include separator materials, while the layer 5006 may include cathode materials. The patches may be formed on the substrate in such way that upon slitting and removal of the substrate 5002, the strips may be rolled directly into jelly rolls without addition of any other electrode or separator components. In other embodiment, other materials, such a layer of a separator, may be added to the winding process.

In a multi-layered electrode structure, such as the one shown in FIGS. 15A and 15B, a layer containing cathode materials and a layer containing anode materials have to form an electrical connection with terminals of an electrochemical cell. To achieve this connection a portion of these layers has to extend beyond the stack. As shown in the figure, the layer 5008 has an extended portion 5010, while the layer 5006 has an extended portion 5012. These extended portions can be formed when other layers of the stack are not deposited in the corresponding areas. For example, in a continuous web deposition process, electrospinning should be controlled in such way that fibers of the other layer don't extend into these areas. As described above, electrospinning process may be stopped by tuning off voltage for the corresponding nozzles or other methods. The operations of nozzles depositing different layers is synchronized in order to achieve a desired structure (and free extended ends of certain layers). Further, various sensors may be used to detect edges of the previously deposited layers and to actuate nozzles for depositing subsequent layers based of the position of the edge.

### Conclusion

Although the foregoing invention has been described in some detail for purposes of clarity of understanding, it will be apparent that certain changes and modifications may be practiced within the scope of the appended claims. It should be noted that there are many alternative ways of implementing the processes, systems and apparatus of the present invention. Accordingly, the present embodiments are to be considered as illustrative and not restrictive, and the invention is limited to the scope of the claims.

## Claims

1. A method for preparing an electrode layer of interconnected hollow nanostructures for use in a rechargeable battery, the method comprising:
receiving a template comprising template structures;
forming a nanoscale template coating of a high capacity material around the template structures, wherein the high capacity material has a theoretical lithiation capacity of at least 600 mAh/g; and
at least partially removing and/or shrinking the template to form the electrode layer of the interconnected hollow nanostructures comprising the high capacity active material;
wherein forming the nanoscale template coating comprises forming junction structures interconnecting two or more interconnected hollow nanostructures, said junction structures comprising one or more materials selected from the group consisting of the high capacity electrochemically active material and metal.

2. The method of claim 1, wherein receiving the template comprises electrospinning a polymeric material to form template nanofibers having a length of at least 5 micrometers.

3. The method of claim 1, wherein the template comprises one or more polymeric materials selected from the group consisting of poly-acrylic nitrides (PAN), nylons, polyethylenes, polyethylene oxides, polyethylene terephthalates, polystyrenes, and polyvinyls.

4. The method of claim 1, further comprising pre-treating the template by compressing the template, thermally stabilizing the template, and/or carbonizing the template.

5. The method of claim 4, wherein thermally stabilizing the template comprising heating the template in an argon atmosphere to between 150°C and 250°C for at least 2 hours.

6. The method of claim 1, further comprising forming a nanoscale substrate coating of the high capacity materials over a conductive substrate surface adjacent to the template, wherein the nanoscale template coating and the nanoscale substrate coating partially overlap to interconnect the conductive substrate and the interconnected hollow nanostructures.

7. The method of claim 1, wherein forming the nanoscale template coating of the high capacity materials around the template comprises:
an initial deposition stage performed at initial process conditions, wherein no substantial shape distortions of the template occur during the initial deposition stage; and
a bulk deposition stage performed at bulk process conditions that are different from the initial process conditions and configured to provide a higher deposition rate of the nanoscale template coating during the bulk deposition stage.

8. The method of claim 1, wherein at least some removal or shrinking of the template occurs during forming the nanoscale template coating of the high capacity material around the template structures.

9. The method of claim 1, wherein partially removing or shrinking the template comprises one or more operations selected from the group consisting of burning the template at a temperature of at least 300°C in presence of an oxidant, chemical etching the template, and annealing the template.

10. The method of claim 1, further comprising forming a second coating over the interconnected hollow nanostructures, the second coating is configured to increase an electronic conductivity of the electrode layer, improve solid electrolyte interphase (SEI) characteristics of the electrode layer, and/or to limit structural changes of the interconnected hollow nanostructures.

11. The method of claim 1, wherein the interconnected hollow nanostructures comprise internal cavities inaccessible to an electrolyte of the rechargeable battery.

12. The method of claim 1, wherein the high capacity electrochemically active material comprises one or more materials selected from the group consisting of silicon, tin, and germanium.

13. An electrode layer for use in a rechargeable battery, the electrode layer comprising:
interconnected hollow nanostructures comprising a high capacity electrochemically active material formed as a nanoscale template coating on a template comprising template structures, the template being partially removed and/or shrunk after forming the nanoscale template coating to form the electrode layer,
wherein the high capacity electrochemically active material has a theoretical lithiation capacity of at least 600 mAh/g,
wherein the interconnected hollow nanostructures comprise internal cavities formed during at least partially removing and/or shrinking the template, the internal cavities providing free space for the high capacity active material to swell into during cycling of the rechargeable battery, and
wherein the electrode layer further comprises structures interconnecting two or more interconnected hollow nanostructures, said structures comprising one or more materials selected from the group consisting of the high capacity electrochemically active material and metal.

14. A rechargeable battery comprising the electrode layer of claim 13.

## Patentansprüche

1. Verfahren zur Herstellung einer Elektrodenschicht aus miteinander verbundenen hohlen Nanostrukturen zur Verwendung in einer wiederaufladbaren Batterie, wobei das Verfahren umfasst:
eine Schablone mit Schablonenstrukturen schaffen;
aus einem hochleistungsfähigen Material eine nanoskalige Schablonenbeschichtung um die Schablonenstrukturen herum bilden, wobei das hochleistungsfähige Material ein theoretisches Lithiierungsvermögen von mindestens 600 mAh/g aufweist; und
die Schablone zumindest teilweise entfernen und/oder schrumpfen, um die die hochleistungsfähige aktive Masse umfassende Elektrodenschicht aus miteinander verbundenen hohlen Nanostrukturen zu bilden;
wobei das Bilden der nanoskaligen Schablonenbeschichtung die Bildung von Verbindungsstrukturen umfasst, die zwei oder mehr miteinander verbundene hohle Nanostrukturen verbinden, wobei die Verbindungsstrukturen einen Werkstoff oder mehrere Werkstoffe umfassen, ausgewählt aus der Gruppe umfassend das hochleistungsfähige elektrochemisch aktive Material und Metall handelt.

2. Verfahren gemäß Anspruch 1, wobei die Erzeugung der Schablone das Elektrospinnen eines Polymermaterials zur Bildung der Schablonen-Nanofasern mit einer Länge von mindestens 5 Mikrometern umfasst.

3. Verfahren gemäß Anspruch 1, wobei die Schablone ein oder mehrere polymere Materialien umfasst, ausgewählt aus der Gruppe umfassend Polyacrylnitril (PAN), Nylon, Polyethylen, Polyethylenoxid, Polybutylenterephthalat, Polystyrol und Polyvinyl handelt.

4. Verfahren gemäß Anspruch 1 ferner umfassend die Schablone durch Komprimieren der Schablone, thermisches Stabilisieren der Schablone und/oder Carbonisieren der Schablone vorbehandeln.

5. Verfahren gemäß Anspruch 4, wobei das thermische Stabilisieren der Schablone umfasst, die Schablone in einer Argonatmosphäre für mindestens 2 Stunden auf 150 °C bis 250 °C erhitzen.

6. Verfahren gemäß Anspruch 1, ferner umfassend eine nanoskalige Substratbeschichtung des hochleistungsfähigen Materials über einer leitenden Substratoberfläche neben der Schablone bilden, wobei sich die nanoskalige Schablonenbeschichtung und die nanoskalige Substratbeschichtung teilweise überlappen, um das elektrisch leitende Substrat und die miteinander verbundenen hohlen Nanostrukturen zu verbinden.

7. Verfahren gemäß Anspruch 1, wobei eine nanoskalige Schablonenbeschichtung aus dem hochleistungsfähigen Material um die Schablone herum bilden umfasst:
eine anfängliche Abscheidephase, die bei den ursprünglichen Prozessbedingungen stattfindet, wobei während der anfänglichen Abscheidephase keine wesentliche Verformung der Schablone auftritt; und
eine Massenabscheidephase, die bei Massenprozessbedingungen stattfindet, die sich von den ursprünglichen Prozessbedingungen unterscheiden und dafür ausgelegt sind, während der Massenabscheidephase eine höhere Abscheiderate der nanoskaligen Schablonenbeschichtung zu erzielen.

8. Verfahren gemäß Anspruch 1, wobei zumindest ein Teil der Schablone entfernt wird oder schrumpft, wenn die nanoskalige Schablonenbeschichtung aus dem hochleistungsfähigen Material um die Schablone herum gebildet wird.

9. Verfahren gemäß Anspruch 1, wobei die teilweise Entfernung oder das Schrumpfen der Schablone einen oder mehrere der folgenden Vorgänge umfasst: die Schablone bei einer Temperatur von mindestens 300 °C in Anwesenheit eines Oxidationsmittels verbrennen, die Schablone chemisch ätzen und/oder die Schablone tempern.

10. Verfahren gemäß Anspruch 1, ferner umfassend eine zweite Beschichtung über den miteinander verbundenen hohlen Nanostrukturen zu bilden, wobei die zweite Beschichtung dafür ausgelegt ist, die elektronische Leitfähigkeit der El-ektrodenschicht zu erhöhen, die Zwischenphaseneigenschaften der Feststoffelektrolyte (SEI) zu verbessern und/oder strukturelle Veränderungen der miteinander verbundenen hohlen Nanostrukturen zu begrenzen.

11. Verfahren gemäß Anspruch 1, wobei die miteinander verbundenen hohlen Nanostrukturen innere Hohlräume umfassen, auf die ein Elektrolyt der wiederaufladbaren Batterie keinen Zugriff hat.

12. Verfahren gemäß Anspruch 1, wobei das hochleistungsfähige elektrochemisch aktive Material ein oder mehrere Materialen ausgewählt aus der Gruppe umfassend Silizium, Zinn und Germanium handelt.

13. Elektrodenschicht zur Verwendung in einer wiederaufladbaren Batterie, wobei die Elektrodenschicht umfasst:
miteinander verbundene hohle Nanostrukturen mit einem hochleistungsfähigen elektrochemisch aktiven Material, das als nanoskalige Schablonenbeschichtung auf einer Schablone mit Schablonenstrukturen ausgebildet ist, wobei die Schablone nach dem Ausbilden der nanoskaligen Schablonenbeschichtung zur Bildung der Elektrodenschicht teilweise entfernt wird und/oder schrumpft,
wobei das hochleistungsfähige elektrochemisch aktive Material ein theoretisches Lithiierungsvermögen von mindestens 600 mAh/g aufweist,
wobei die miteinander verbundenen hohlen Nanostrukturen innere Hohlräume aufweisen, die während des zumindest teilweisen Entfernens und/oder Schrumpfens der Schablone gebildet werden, wobei die inneren Hohlräume freie Räume für das hochleistungsfähige aktive Material darstellen, in die es sich während einer Dauerprüfung der wiederaufladbaren Batterie ausdehnen kann und
wobei die Elektrodenschicht ferner miteinander verbundene Strukturen umfasst, die zwei oder mehr miteinander verbundene hohle Nanostrukturen verbinden, wobei diese Strukturen einen Werkstoff oder mehrere Werkstoffe umfassen, bei denen es sich um das hochleistungsfähige elektrochemisch aktive Material und Metall handelt.

14. Wiederaufladbare Batterie, umfassend die Elektrodenschicht gemäß Anspruch 13.

## Revendications

1. Un procédé destiné à la préparation d'une couche d'électrode de nanostructures creuses interconnectées destinées à être utilisées dans une batterie rechargeable, le procédé comprenant :
la réception d'un modèle comprenant les structures de modèle ;
la formation d'un revêtement de modèle à l'échelle nanométrique d'un matériau à capacité élevée autour des structures de modèle, dans lequel le matériau à capacité élevée présente une capacité de lithiation théorique d'au moins 600 mAh/g ; et
le retrait et/ou le rétrécissement au moins partiellement du modèle pour former la couche d'électrode des nanostructures creuses interconnectées comprenant le matériau actif à capacité élevée ;
dans lequel la formation du revêtement de modèle à l'échelle nanométrique comprend la formation des structures de jonction interconnectant deux ou plusieurs nanostructures creuses interconnectées, lesdites structures de jonction comprenant un ou plusieurs matériaux sélectionnés parmi le groupe comprenant le matériau actif électrochimiquement à capacité élevée et le métal.

2. Le procédé selon la revendication 1, dans lequel la réception du modèle comprend l'électrofilage d'un matériau polymère pour former les nanofibres du modèle présentant une longueur d'au moins 5 micromètres.

3. Le procédé selon la revendication 1, dans lequel le modèle comprend un ou plusieurs matériaux polymères sélectionnés parmi le groupe composé des polyacrylonitriles (PAN), des nylons, des polyéthylènes, des oxydes de polyéthylène, des téréphtalates de polyéthylène, des polystyrènes et des polyvinyles.

4. Le procédé selon la revendication 1, comprenant en outre le prétraitement du modèle par la compression du modèle, la stabilisation thermique du modèle et/ou la carbonisation du modèle.

5. Le procédé selon la revendication 4, dans lequel la stabilisation thermique du modèle comprend le chauffage du modèle sous atmosphère d'argon entre 150 °C et 250 °C pendant au moins 2 heures.

6. Le procédé selon la revendication 1, comprenant en outre la formation d'un revêtement de substrat à l'échelle nanométrique de matériaux à capacité élevée sur une surface de substrat conducteur, adjacente au modèle, dans lequel le revêtement de modèle à l'échelle nanométrique et le revêtement de substrat à l'échelle nanométrique se chevauchent partiellement pour interconnecter le substrat conducteur et les nanostructures creuses interconnectées.

7. Le procédé selon la revendication 1, dans lequel la formation du revêtement de modèle à l'échelle nanométrique de matériaux à capacité élevée autour du modèle comprend :
une étape de dépôt initial effectuée aux conditions du processus initial, dans lequel aucune distorsion de forme substantielle du modèle ne se produit au cours de l'étape de dépôt initial ; et
une étape de dépôt en vrac effectuée aux conditions du processus en vrac qui sont différentes des conditions du processus initial et conçue pour fournir une plus grande vitesse de dépôt du revêtement de modèle à l'échelle nanométrique pendant le stade de dépôts en vrac.

8. Le procédé selon la revendication 1, dans lequel au moins un certain retrait ou rétrécissement du modèle se produit au cours de la formation du revêtement de modèle à l'échelle nanométrique de matériau à capacité élevée autour des structures de modèle.

9. Le procédé selon la revendication 1, dans lequel le retrait ou le rétrécissement partiellement du modèle comprend une ou plusieurs opérations sélectionnées parmi le groupe comprenant la combustion du modèle à une température d'au moins 300 °C en présence d'un oxydant, la gravure chimique du modèle et le recuit du modèle.

10. Le procédé selon la revendication 1, comprenant en outre la formation d'un second revêtement sur les nanostructures creuses interconnectées, le second revêtement est conçu pour augmenter une conductivité électronique de la couche d'électrode, pour améliorer les caractéristiques de l'interphase à électrolyte solide (SEI) de la couche d'électrode et/ou pour limiter les changements structurels des nanostructures creuses interconnectées.

11. Le procédé selon la revendication 1, dans lequel les nanostructures creuses interconnectées forment des cavités internes inaccessibles à un électrolyte de la batterie rechargeable.

12. Le procédé selon la revendication 1, dans lequel le matériau actif électrochimiquement à capacité élevée comprend un ou plusieurs matériaux sélectionnés parmi le groupe composé du silicium, de l'étain et du germanium.

13. Une couche d'électrode destinée à être utilisée dans une batterie rechargeable, la couche d'électrode comprenant :
des nanostructures creuses interconnectées comprenant un matériau actif électrochimiquement à capacité élevée formé comme un revêtement de modèle à l'échelle nanométrique sur un modèle comprenant des structures de modèle, le modèle étant retiré et/ou rétréci partiellement après la formation du revêtement de modèle à l'échelle nanométrique pour former la couche d'électrode,
dans laquelle le matériau actif électrochimiquement à capacité élevée présente une capacité de lithiation théorique d'au moins 600 mAh/g,
dans laquelle les nanostructures creuses interconnectées comprennent des cavités internes formées pendant au moins le retrait et/ou le rétrécissement partiellement du modèle, les cavités internes offrant un espace libre destiné au matériau actif à capacité élevée pour gonfler au cours du cycle de la batterie rechargeable et
dans laquelle la couche d'électrode comprend en outre des structures interconnectant deux ou plusieurs nanostructures creuses interconnectées, lesdites structures comprenant un ou plusieurs matériaux sélectionnés parmi le groupe comprenant le matériau actif électrochimiquement à capacité élevée et le métal.

14. Une batterie rechargeable comprenant la couche d'électrode selon la revendication 13.
